# EUROPÄISCHE PATENTSCHRIFT

(11) **EP 3 180 102 B1**
(45) Veröffentlichungstag und Bekanntmachung des Hinweises auf die Patenterteilung: **30.03.2022**
(21) Anmeldenummer: 15805390.0
(22) Anmeldetag: 25.11.2015
(51) Int. Cl.: B01D 35/30

(54) **VERBINDUNGSSTRUKTUR ZUM VERBINDEN EINES FILTERGEHÄUSES MIT EINER FILTERGEHÄUSEHALTESTRUKTUR, REINIGUNGSSYSTEM UND VERFAHREN ZUM VERBINDEN EINES FILTERGEHÄUSEDECKELS MIT EINER FILTERGEHÄUSEHALTESTRUKTUR**
CONNECTING STRUCTURE FOR CONNECTING A FILTER HOUSING TO A FILTER HOUSING HOLDING STRUCTURE, CLEANING SYSTEM AND METHOD FOR CONNECTING A FILTER HOUSING COVER TO A FILTER HOUSING HOLDING STRUCTURE
STRUCTURE D'ASSEMBLAGE PERMETTANT D'ASSEMBLER UN CARTER DE FILTRE À UNE STRUCTURE DE SUPPORT DE CARTER DE FILTRE, SYSTÈME DE NETTOYAGE ET PROCÉDÉ D'ASSEMBLAGE D'UN COUVERCLE DE CARTER DE FILTRE À UNE STRUCTURE DE SUPPORT DE CARTER DE FILTRE

(30) Priorität: 26.11.2014 DE 102014017537
(43) Veröffentlichungstag der Anmeldung: 21.06.2017
(73) Patentinhaber: Sartorius Lab Instruments GmbH & Co. KG, 37079 Göttingen (DE)
(72) Erfinder: RITZKA, Roman, 37434 Obernfield (DE); PURMANN, Sebastian, 37079 Göttingen (DE); BRISLAND, Richard, Dursley Gloucesterhire GL114EY (GB)
(74) Vertreter: Novagraaf International SA
(86) Internationale Anmeldenummer: PCT/EP2015/002369
(87) Internationale Veröffentlichungsnummer: WO 2016/082931

(56) Entgegenhaltungen:
- EP-A1- 1 542 782
- EP-A2- 0 870 921
- WO-A1-2014/210365
- US-B1- 6 896 713

## Beschreibung

Die vorliegende Anmeldung betrifft eine Verbindungsstruktur zum Verbinden eines Filtergehäuses mit einer Filtergehäusehaltestruktur, ein Reinigungssystem, das eine derartige Verbindungsstruktur und eine Filtergehäusehaltestruktur umfasst, und ein Verfahren zum Verbinden eines Filtergehäusedeckels mit einer Filtergehäusehaltestruktur.

Zur Speisung von Laborgeräten (z.B. Autoklaven, Spülmaschinen, Wasserbädern, etc.) wird üblicherweise Reinwasser benötigt. Dieses sollte möglichst frei von Ionen, organischen Bestandteilen, Partikeln und anderen möglichen Verunreinigungen sein, um die Funktionsfähigkeit der Laborgeräte nicht zu beeinflussen oder in der Folge Kontaminationen hervorzurufen.

Für das Ansetzen von Puffern und Zellkulturmedien wird ebenfalls Wasser benötigt. Um das Wachstum der Zellkulturen nicht negativ zu beeinflussen, muss das eingesetzte Wasser einen hohen Reinheitsgrad aufweisen.

Um Reinwasser bzw. Reinstwasser für die oben beschriebenen Anwendungen bereitzustellen, werden üblicherweise Wasseraufbereitungssysteme verwendet, die die entsprechenden Verunreinigungen aus dem Wasser entfernen.

In diesem System wird Wasser durch ein Filtergehäuse geführt, das ein Filtermedium, wie beispielsweise Aktivkohle und/oder Harz, enthält, das die unerwünschten Verunreinigungen aus dem Wasser filtert.

Das Filtergehäuse wird hierzu mit einem Gehäuse des Wasseraufbereitungssystems gekoppelt, um über das Gehäuse des Wasseraufbereitungsgerätes, das das zu reinigende Wasser enthält oder an eine entsprechende Wasserzuführungsleitung angeschlossen ist, gespeist zu werden. Das gereinigte Wasser fließt anschließend wieder in Auffangbehälter für das gereinigte Wasser innerhalb des Wasseraufbereitungsgerätes zurück.

Die Kopplung des Filtergehäuses mit dem Gehäuse des Wasseraufbereitungsgerätes stellt sich im Stand der Technik jedoch als problematisch dar.

Aus der europäischen Patentschrift EP 1 542 782 B1 ist beispielsweise eine Tragkonstruktion für ein Filtergehäuse bekannt. Die Tragkonstruktion weist zwei einander zugewandte Tragarme auf. An den einander zugewandten Seiten der Tragarme ist jeweils ein Ausschnitt vorgesehen, der sich in einer Verbindungsrichtung des Filtergehäuses mit der Tragkonstruktion erstreckt. Die Ausschnitte verjüngen sich zu der Tragkonstruktion hin. Auf einer unteren Fläche des Ausschnitts befindet sich eine Rastnase, die in den Ausschnitt hinein ragt. Das Filtergehäuse weist einen Deckel auf, dessen seitliche Flächen jeweils in die Ausschnitte einschiebbar sind. Hierzu werden die seitlichen Flächen des Deckels zunächst in einer gekippten Lage entlang der oberen Fläche der Ausschnitte zu der Tragkonstruktion hin bewegt. Sobald der Benutzer einen Widerstand verspürt, das der verbundenen Position entsprechen sollte, muss der Benutzer den Deckel bzw. das Filtergehäuse nach unten kippen, so dass ein Ausschnitt in der jeweiligen seitlichen Fläche des Deckels mit der Rastnase in dem Ausschnitt der Tragarme verrastet.

Diese aus dem Stand der Technik bekannte Konstruktion weist jedoch den Nachteil auf, dass die seitlichen Flächen des Deckels zunächst genau in den Bereich zwischen den Rastnasen und der schrägen oberen Fläche der beiden Ausschnitte in den Tragarmen eingepasst werden müssen. Dies erfordert, dass der Deckel bzw. das Filtergehäuse in der exakten gekippten Position gehalten werden, da ansonsten die Rastnase in den Ausschnitten ein Verschieben bis zur verbundenen Position blockieren würde.

Ferner zeigt EP 0 870 921 A2 eine Filteranordnung, die einen Filterkopf und einen Filterkörper umfasst. Der Filterkörper und der Filterkopf sind mit Komponenten versehen, die so angeordnet sind, dass sie zusammenwirken, um zu ermöglichen, dass der Filterkörper an dem Filterkopf, durch Verschieben des Filterkörpers in eine seitliche Richtung relativ zu dem Filterkopf, befestigt wird.

Die US 6 896 713 B1 zeigt einen Flüssigkeitsabscheider zum Abscheiden von Flüssigkeit aus Gasen, aufweisend: eine Wasserfalle, die einen Behälter, einen Verbinder für einen einströmenden Gasfluss, eine Trennkammer, die einen Filter und mindestens einen Verbindungsdurchgang umfasst. Die Wasserfalle kann lösbar in eine mit dem Analyseninstrument verbundene Halteeinheit eingebaut werden, wobei die Halteeinheit Verbindungsvorrichtungen zur Aufnahme des Verbindungsdurchgangs aufweisen.

Folglich ist die Aufgabe der vorliegenden Erfindung, eine Verbindungsstruktur zum Verbinden eines Filtergehäuses mit einer Filtergehäusehaltestruktur bereitzustellen, die ein einfaches und zuverlässiges Verbinden ermöglicht.

Diese Aufgabe wird durch die Gegenstände der unabhängigen Ansprüche gelöst. Bevorzugte Ausführungsformen sind in den abhängigen Ansprüchen definiert.

Ein Aspekt betrifft eine Verbindungsstruktur zum Verbinden eines Filtergehäuses mit einer Filtergehäusehaltestruktur gelöst, die dazu ausgelegt ist, eine zu reinigende Flüssigkeit dem Filtergehäuse zuzuführen und die gereinigte Flüssigkeit abzuführen, wobei die Verbindungsstruktur umfasst:
- einen Filtergehäusedeckel, der mit dem Filtergehäuse, welches dazu ausgelegt ist, ein Filtermedium aufzunehmen, verbindbar ist, umfassend:
   - mindestens zwei Filtergehäusedeckel-Anschlusselemente, die mit entsprechenden Filtergehäusehaltestruktur-Anschlusselementen in der Filtergehäusehaltestruktur verbindbar sind, um einen Flüssigkeitsaustausch zwischen der Filtergehäusehaltestruktur und dem Filtergehäuse bereitzustellen;
   - mindestens zwei Filtergehäusedeckel-Führungsglieder, die an im Wesentlichen entgegengesetzten Seiten des Filtergehäusedeckels bereitgestellt sind; und
- Führungsglieder, die an der Filtergehäusehaltestruktur angeordnet sind und derart ausgebildet sind, dass die Filtergehäusedeckel-Führungsglieder während des Verbindungsvorgangs der Filtergehäusedeckel-Anschlusselemente mit den Filtergehäusehaltestruktur-Anschlusselementen mit den Führungsgliedern in Eingriff gebracht sind, um den Filtergehäusedeckel während des Verbindungsvorgangs zu stützen, zu führen und in einer linearen Verbindungsrichtung verschiebbar zu lagern.

Der Begriff "linear" umfasst hierbei auch eine im Wesentlichen lineare Verbindungsrichtung. Unter "im Wesentlichen" wird eine geringfügige Abweichung durch beispielsweise eine Aufweitung verstanden.

Der Begriff "verbindbar" umfasst sowohl reversible Verbindungen zwischen den Filtergehäusehaltestruktur-Anschlusselementen und den Anschlusselementen des Filtergehäusedeckels als auch nicht reversible, feste Verbindungen zwischen dem Filtergehäusedeckel und dem Filtergehäuse. Die Verbindung zwischen dem Filtergehäusedeckel und dem Filtergehäuse kann jedoch auch als nicht reversible Verbindung ausgestaltet sein.

Durch die Führungsglieder wird ermöglicht, dass der Filtergehäusedeckel, an dem sich die Filtergehäusedeckel-Anschlusselemente befinden, durch eine geradlinige Bewegung zu den Filtergehäusehaltestruktur-Anschlusselementen führbar ist. Der Filtergehäusedeckel wird während des gesamten Verbindungsvorgangs gestützt und in einer vorgegebenen Position gehalten, so dass die Filtergehäusedeckel-Anschlusselemente zuverlässig mit den Filtergehäusehaltestruktur-Anschlusselementen verbunden werden können. Mit anderen Worten werden die Filtergehäusedeckel-Anschlusselemente des Filtergehäusesdeckels gezielt zu den Filtergehäusehaltestruktur-Anschlusselementen geführt. Ein Verkippen kann insbesondere vollständig vermieden werden, so dass der Benutzer den Filtergehäusedeckel mit einer Hand mit der Filtergehäusehaltestruktur verbinden kann.

Die mindestens zwei Filtergehäusedeckel-Führungsglieder ragen von den zwei entgegengesetzten Seiten des Filtergehäusedeckels in eine Richtung im Wesentlichen senkrecht zu einer Anschlussrichtung der Filtergehäusedeckel-Anschlusselemente hervor.

Die Filtergehäusedeckel-Führungsglieder können somit zuverlässig in den Führungsgliedern positioniert und zu der Filtergehäusehaltestruktur geführt werden. Eine seitliche Kippbewegung oder ein Verkanten wird so verhindert. Die an dem Filtergehäusedeckel ausgebildeten Filtergehäusedeckel-Anschlusselemente können folglich exakt zu den Filtergehäusehaltestruktur-Anschlusselemente verschoben werden, so dass eine zuverlässige Verbindung hergestellt werden kann. Es ist ferner bevorzugt, dass zumindest ein Rastglied zum Verrasten des Filtergehäusedeckels in einer verbundenen Position, in der die Filtergehäusedeckel-Anschlusselemente mit den Filtergehäusehaltestruktur-Anschlusselementen vollständig verbunden sind, angeordnet ist.

Das Rastglied bietet zum einen den Vorteil, dass der Benutzer kurz vor der verbundenen Position einen erhöhten Widerstand bemerkt, wodurch dem Benutzer vermittelt wird, dass der Filtergehäusedeckel fast in der verbunden Position angekommen ist. Durch ein gezieltes Überwinden des erhöhten Widerstands verrastet das entsprechende Element mit dem Rastglied, wodurch der Filtergehäusedeckel in der verbundenen Position gehalten wird. Ein versehentliches Entfernen des Filtergehäusedeckels kann somit vermieden werden, so dass die Verbindung zwischen den Filtergehäusedeckel-Anschlusselementen und den Filtergehäusehaltestruktur-Anschlusselementen zuverlässig gehalten werden kann.

Vorzugsweise entspricht die Anschlussrichtung im Wesentlichen der Verbindungsrichtung.

Sobald der Filtergehäusedeckel in Eingriff mit den Führungsgliedern steht, sind die Filtergehäusedeckel-Anschlusselemente, die in einer Anschlussrichtung ausgerichtet sind, in der Verbindungsrichtung ausgerichtet. Wird der Filtergehäusedeckel in der Verbindungsrichtung zu den Filtergehäusehaltestruktur-Anschlusselementen, die vorzugsweise ebenfalls in der Anschlussrichtung ausgerichtet sind, bewegt, können die Filtergehäusedeckel-Anschlusselemente geradlinig mit den Filtergehäusehaltestruktur-Anschlusselementen verbunden werden, so dass eine zuverlässige Verbindung hergestellt werden kann. Jegliche Kippbewegungen, um eine Verbindung herzustellen, werden vermieden.

Weiter bevorzugt weisen die Führungsglieder Führungsschienen auf, die einander gegenüberliegen und linear entsprechend der Verbindungsrichtung ausgebildet sind.

Gemäß der Erfindung umfasst das Rastglied Filtergehäusedeckel-Rastnasen und

Führungsglied-Rastaussparungen, wobei die Führungsglieder jeweils zumindest eine Führungsglied-Rastaussparung umfassen, in die jeweils eine Filtergehäusedeckel-Rastnase, die an dem Filtergehäusedeckel angeordnet ist, in einer verbundenen Position, in der die Filtergehäusedeckel-Anschlusselemente mit den Filtergehäusehaltestruktur-Anschlusselementen vollständig verbunden sind, verrastbar sind.

Die Filtergehäusedeckel-Führungsglieder sind rückstellfähig gelagert und umfassen Betätigungsflächen, die sich in einer Anschlussrichtung der Filtergehäusedeckel-Anschlusselemente erstrecken und von dem Filtergehäusedeckel in einer Richtung entgegengesetzt zu den Filtergehäusedeckel-Anschlusselementen vorragen. Hierdurch wird ermöglicht, dass die Verrastung zwischen der Filtergehäusehaltestruktur und dem Filtergehäusedeckel durch ein Zusammenpressen der Betätigungsflächen gelöst werden kann. Zusätzlich kann die Verrastung unterstützt werden, indem der Benutzer die Betätigungsflächen in der verbundenen Position auseinander presst, um sicherzustellen, dass die Filtergehäusedeckel-Rastnasen mit den Führungsglied-Rastaussparungen zuverlässig verrastet sind.

Ferner ist es bevorzugt, dass die Betätigungsflächen derart ausgebildet sind, dass sie sich in Anschlussrichtung und/oder Verbindungsrichtung aufweiten oder verjüngen.

Durch eine sich aufweitende bzw. verjüngende Form der Betätigungsflächen kann der Benutzer die Betätigungsflächen sicher greifen. Insbesondere durch die sich verjüngende Form der Betätigungsflächen kann weiterhin sichergestellt werden, dass auch Menschen mit kleineren Händen mit einer Hand die Betätigungsflächen bedienen können.

Ferner ist vorgesehen, dass die Filtergehäusedeckel-Rastnasen in einer Richtung senkrecht zu der Anschlussrichtung von den Filtergehäuse-Führungsgliedern vorspringen.

Hierdurch wird unter anderem ermöglicht, dass die Filtergehäusedeckel-Rastnasen von außen gut sichtbar sind, wenn die Filtergehäusedeckel-Rastnasen in die Führungsglied-Rastaussparungen eingetreten sind. Hierzu sind die Führungsglied-Rastaussparungen vorzugsweise als Durchgangsöffnungen in den Führungsgliedern ausgebildet.

Vorzugsweise ist zumindest ein Druckgeber an einem hinteren Ende des Filtergehäusedeckels angeordnet ist, der dazu ausgelegt ist, durch einen Benutzer zum Verbinden des Filtergehäusedeckels mit der Filtergehäusehaltestruktur gedrückt zu werden.

Als hinteres Ende des Filtergehäusedeckels wird hierbei das Ende verstanden, das dem Ende entgegengesetzt ist, an dem die Filtergehäusedeckel-Anschlusselemente angeordnet sind. Drückt ein Benutzer den Druckgeber insbesondere am Ende des Verbindungsvorgangs kann der Benutzer in erleichterter Weise die nötige Kraft aufbringen, die Filtergehäusedeckel-Anschlusselemente mit den Filtergehäusehaltestruktur-Anschlusselementen vollständig zu verbinden.

Gemäß einem weiteren Aspekt der vorliegenden Anmeldung wird das zugrunde liegende Problem durch ein Reinigungssystem gelöst, welches eine Verbindungsstruktur nach einer der oben beschriebenen Ausführungsformen gemäß des oben genannten Aspekts und eine Filtergehäusehaltestruktur, mit der der Filtergehäusedeckel verbindbar ist, umfasst.

Vorzugsweise weist die Filtergehäusehaltestruktur Filtergehäusehaltestruktur-Anschlusselemente auf, die in Verbindungsrichtung ausgerichtet sind und mit denen die Filtergehäusedeckel-Anschlusselemente des Filtergehäusedeckels verbindbar sind.

Darüber hinaus ist es bevorzugt, dass der Filtergehäusedeckel mit dem Filtergehäuse verbunden ist, und die rückstellfähige Rastklammer ausgelegt ist, das Filtergehäuse in dem verbundenen Zustand aufzunehmen.

Vorzugsweise sind die Führungsglieder durch eine Halteplatte verbunden, die an einem Gehäuse der Filtergehäusehaltestruktur angeordnet ist, und
wobei die Filtergehäusehaltestruktur-Anschlusselemente jeweils in eine Aussparung in der Halteplatte eingesetzt sind und durch diese hindurchragen, um mit den Filtergehäusedeckel-Anschlusselementen verbindbar zu sein. Vorzugsweise ist das Filtergehäusehaltestruktur-Anschlusselement derart in der Aussparung gelagert ist, dass ein Verschieben in der Verbindungsrichtung V blockiert ist.

Ein Beispiel zum besseren Verständnis der Erfindung betrifft einen Filtergehäusedeckel für ein Filtergehäuse, das mit einer Filtergehäusehaltestruktur, die dazu ausgelegt ist, eine zu reinigende Flüssigkeit dem Filtergehäuse zuzuführen und die gereinigte Flüssigkeit abzuführen, verbindbar ist,
wobei der Filtergehäusedeckel ausgelegt ist, mit dem Filtergehäuse verbunden zu werden;
wobei der Filtergehäusedeckel mindestens zwei Filtergehäusedeckel-Anschlusselemente umfasst, die mit entsprechenden Filtergehäusehaltestruktur-Anschlusselementen in der Filtergehäusehaltestruktur verbindbar sind, um einen Flüssigkeitsaustausch zwischen der Filtergehäusehaltestruktur und dem Filtergehäuse bereitzustellen; und
wobei der Filtergehäusedeckel mindestens zwei Filtergehäusedeckel-Führungsglieder aufweist, die an entgegengesetzten Seiten des Filtergehäusedeckels bereitgestellt sind und dazu ausgelegt sind, in Führungsglieder einzugreifen, die an der Filtergehäusehaltestruktur befestigbar sind, um während des Verbindungsvorgangs der Filtergehäusedeckel-Anschlusselemente mit den Filtergehäusehaltestruktur-Anschlusselementen gestützt und geführt zu werden und in einer linearen Verbindungsrichtung verschiebbar gelagert zu sein.

Gemäß einem weiteren Aspekt der vorliegenden Anmeldung wird das zugrunde liegende Problem durch ein Verfahren zum Verbinden eines Filtergehäusedeckels mit einer Filtergehäusehaltestruktur gelöst, wobei das Verfahren umfasst:
- Bereitstellen eines Reinigungssystems gemäß einer der oben beschriebenen Ausführungsformen des weiteren Aspekts der vorliegenden Anmeldung;
- Einsetzen der Filtergehäusedeckel-Führungsglieder in die Führungsglieder derart, dass die Filtergehäusedeckel-Führungsglieder in den Führungsgliedern gestützt werden;
- lineares Verschieben des Filtergehäusedeckels in der Verbindungsrichtung bis die Filtergehäusedeckel-Anschlusselemente des Filtergehäusedeckels mit den Filtergehäusehaltestruktur-Anschlusselementen der Filtergehäusehaltestruktur verbunden sind.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen deutlicher. Es ist ersichtlich, dass, obwohl Ausführungsformen separat beschrieben werden, einzelne Merkmale daraus zu zusätzlichen Ausführungsformen kombiniert werden können.
- Fig. 1: zeigt einen Führungsrahmen mittels dem ein Filtergehäuse mit einer Filtergehäusehaltestruktur verbindbar ist;
- Fig. 2: zeigt eine Querschnittsansicht eines Anschlusssteckers und einer Anschlussbuchse;
- Fig. 3: zeigt eine Rastklammer als Mittel zum Verrasten eines Filtergehäuses in einer verbundenen Position;
- Fig. 4: zeigt Rasthaken als Mittel zum Verrasten eines Filtergehäuses in der verbundenen Position;
- Fig. 5: zeigt einen Schnappverschluss als Mittel zum Verrasten eines Filtergehäuses in der verbundenen Position;
- Fig. 6a) - c): zeigen einen Filtergehäusedeckel mit Filtergehäusedeckel-Rastnasen, die im verbundenen Zustand in Führungsglied-Rastaussparungen in den Führungsgliedern einrasten, und mit sich aufweitenden Betätigungsflächen;
- Fig. 7a) - b): zeigen den Filtergehäusedeckel der Figur 6 in einem verbundenen Zustand und einem Zustand bevor der Filtergehäusedeckel in die Führungsglieder eingesetzt ist;
- Fig. 8: zeigt eine Ausführungsform ähnlich zu der Ausführungsform aus den Figuren 6 und 7, jedoch mit sich verengenden Betätigungsflächen;
- Fig. 9: zeigt ein Filtergehäuse gemäß der Ausführungsform in Figur 8 bevor der Filtergehäusedeckel in die Führungsglieder eingesetzt ist;
- Fig. 10: zeigt eine perspektivische Ansicht eines bevorzugten Filtergehäusedeckels und eines bevorzugten Führungsrahmens;
- Fig. 11: zeigt eine Schnittansicht durch den Führungsrahmen und den Filtergehäusedeckel aus Figur 10, die entlang der Verbindungsrichtung V geschnitten sind; und
- Fig. 12: zeigt eine perspektivische Ansicht des Führungsrahmens und des Filtergehäusedeckels aus den Figuren 10 und 11 von einer Rückseite.

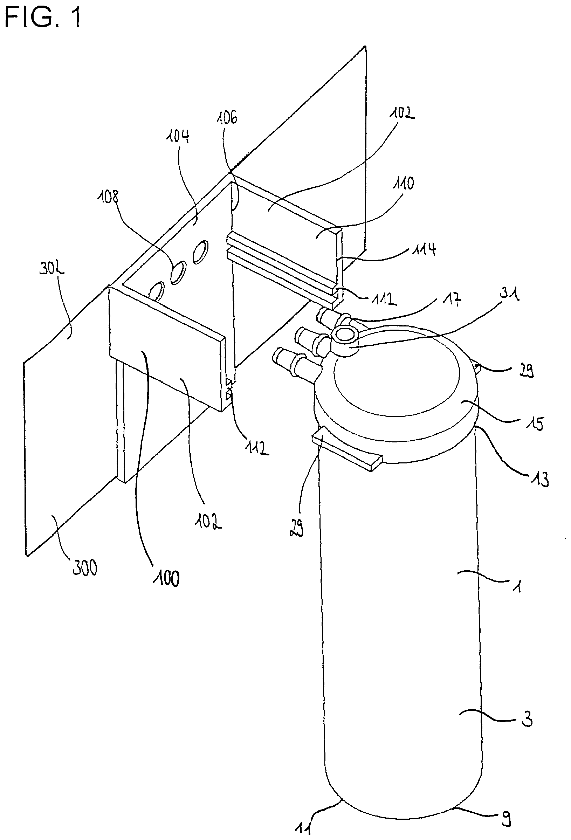

**Figur 1** zeigt ein Filtergehäuse 1, das einen rohrförmigen Basiskörper 3 umfasst. Ein Basiskörper-Innenraum des Basiskörpers 3 ist dazu ausgelegt, ein Filtermedium oder mehrere unterschiedliche Filtermedien (nicht gezeigt), wie beispielsweise Aktivkohle und/oder Harze, zur Reinigung eines Fluids, z.B. von Wasser, aufzunehmen. Hierzu können die Filtermedien direkt in den Basiskörper-Innenraum eingefüllt sein oder mittels Filterkartuschen, die die Filtermedien enthalten, in den Basiskörper-Innenraum eingesetzt werden.

Um den Basiskörper-Innenraum nach außen hin zu verschließen, umfasst das Filtergehäuse 1 ferner an oder nahe einem ersten freien Ende 9 einen Filtergehäuseboden 11 und an oder nahe einem zweiten freien Ende 13 einen Filtergehäusedeckel 15. Der Filtergehäuseboden 11 und/oder der Filtergehäusedeckel 15 können zusammen mit dem Basiskörper 3 aus einem Stück geformt oder aus mehreren Teilen nicht lösbar miteinander verbunden sein. Um jedoch ein Wechseln der Filterkartusche bzw. des Filtermediums zu ermöglichen, ist es bevorzugt, dass der Filtergehäuseboden 11 und/oder der Filtergehäusedeckel 15 separat von dem Basiskörper 3 ausgebildet und somit lösbar miteinander verbunden sind. Der Filtergehäuseboden 11 und der Filtergehäusedeckel 15 können beispielsweise mit dem Basiskörper 3 verschraubbar sein oder miteinander verrasten.

Der Filtergehäusedeckel 15 weist zumindest zwei Anschlussstecker 17 als bevorzugte Filtergehäusedeckel-Anschlusselemente auf, die jeweils mit einer entsprechenden Anschlussbuchse (in Figur 1 nicht gezeigt) als bevorzugte Filtergehäusehaltestruktur-Anschlusselemente einer Filtergehäusehaltestruktur 300 verbindbar sind, um eine Fluidverbindung zwischen der Filtergehäusehaltestruktur 300 und dem Filtergehäuse 1 herzustellen. Mit anderen Worten kann über eine Verbindung zwischen den Anschlusssteckern 17 und den Anschlussbuchsen ein zu reinigendes Fluid von der Filtergehäusehaltestruktur 300 mittels vorzugsweise einer Pumpe (nicht gezeigt) zu dem Filtermedium in dem Filtergehäuse 1 geführt werden. Weiterhin kann das gereinigte Fluid (z.B. Reinwasser oder Reinstwasser) wieder zu der Filtergehäusehaltestruktur 300 in einen Auffangbehälter für das gereinigte Fluid zurückgeführt werden. Beispielsweise wird eine Fluidverbindung zwischen einem ersten Anschlussstecker 17 und einer ersten Anschlussbuchse dazu verwendet, um ein zu reinigendes Fluid zu dem Filtermedium in dem Filtergehäuse 1 zu führen, während eine Fluidverbindung zwischen einem zweiten Anschlussstecker 17 und einer zweiten Anschlussbuchse zur Rückführung des gereinigten Fluids in dazu vorgesehene Auffangbehälter verwendet wird.

Obwohl die Bereitstellung von Anschlusssteckern 17 in dieser Anmeldung lediglich in Bezug auf den Filtergehäusedeckel 15 beschrieben wird, kann auch der Filtergehäuseboden 11 Anschlussstecker aufweisen. Insbesondere können der Filtergehäusedeckel 15 und der Filtergehäuseboden 11 identisch ausgebildet sein. Weiterhin können, obwohl Figur 1 einen Filtergehäusedeckel 15 mit Anschlusssteckern 17 zeigt, alternativ Anschlussbuchsen an dem Filtergehäusedeckel 15 ausgebildet sein, während die Anschlussstecker 17 an der Filtergehäusehaltestruktur 300 angeordnet sind.

Weiterhin sind die Anschlussstecker 17 parallel zueinander und zur selben Seite des Filtergehäusedeckels 15 ausgerichtet. Wie in Figur 1 gezeigt, ragen die Anschlussstecker 17 von dem Filtergehäusedeckel 15 vor. Die Anschlussstecker 17 können einstückig mit dem Filtergehäusedeckel 15 ausgebildet sein oder zumindest teilweise als separate Bauteile ausgeformt sein. In letzterem Fall können die Anschlussstecker 17 mit dem Filtergehäusedeckel 15 vorzugsweise mittels einer Rast-, Schraub- oder Klebeverbindung verbunden sein.

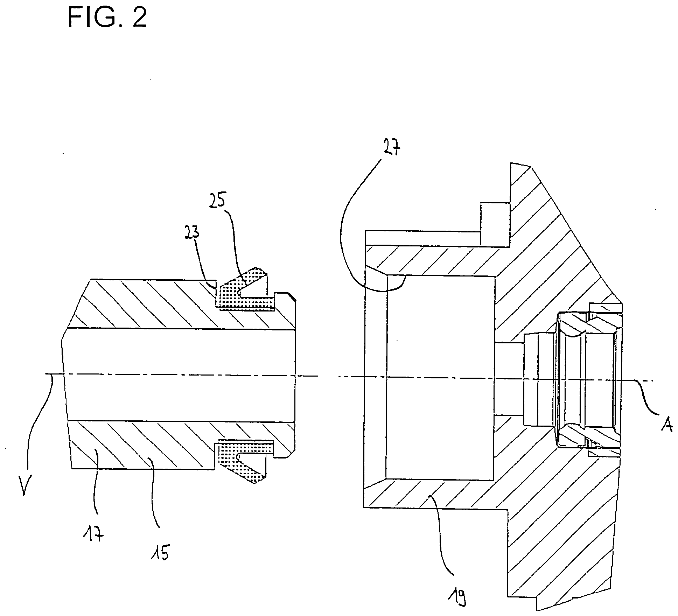

**Figur 2** zeigt eine Querschnittsansicht eines Anschlusssteckers 17 und einer Anschlussbuchse 19.

Die Ausrichtung des Anschlusssteckers 17 bzw. der Anschlussbuchse 19 wird als Anschlussrichtung A bezeichnet. Um die Anschlussstecker 17 mit der Anschlussbuchse 19 verbinden zu können, ist die Anschlussrichtung A des Anschlusssteckers 17 und der Anschlussbuchse 19 identisch. Insbesondere entspricht die Anschlussrichtung A der Rotationsachse des Anschlusssteckers 17 bzw. der Anschlussbuchse 19.

Um eine fluiddichte Verbindung zwischen dem Anschlussstecker 17 und der Anschlussbuchse 19 herstellen zu können, weist der Anschlussstecker 17 an einer äußeren Seite 21 zumindest eine umlaufende Kerbe 23 auf, in die (jeweils) ein Dichtungselement 25 eingesetzt ist. In einem verbundenen Zustand des Anschlusssteckers 17 mit der Anschlussbuchse 19 gelangt das Dichtungselement 25 in Kontakt mit einer inneren Seite 27 der Anschlussbuchse 19, so dass eine fluiddichte Verbindung zwischen den Anschlusselementen hergestellt ist.

Alternativ kann zumindest eine Kerbe in der inneren Seitenfläche der Anschlussbuchse 19 ausgebildet sein, in der das Dichtungselement 25 angeordnet ist.

Das Dichtungselement 25 kann ein kreisrunder Dichtungsring, ein Quad-Ring, ein C-Ring, ein O-Ring, ein D-Ring oder ein L-Ring sein oder im 2-Komponentenkunststoffsystem aufgespritzt sein. Vorzugsweise ist das Dichtungselement 25 mit einer Beschichtung, wie beispielsweise Teflon, und/oder einem Schmiermittel versehen, wodurch ein verbessertes Verrasten des Filtergehäuses 1 mit der Filtergehäusehaltestruktur 300 zu ermöglicht wird. Als besonders bevorzugt wird eine teflonbeschichteter Quad-Ring angesehen.

Um das Filtergehäuse 1 mit dem Filtermedium mit der Filtergehäusehaltestruktur 300 zu verbinden und dort zu halten bzw. zu stützen, weist die Filtergehäusehaltestruktur 300 Führungsglieder auf. Diese Führungsglieder können vorzugsweise in einem Führungsrahmen 100 ausgebildet sein, der an der Filtergehäusehaltestruktur 300 angeordnet, wie in **Figur** 1 gezeigt ist. Insbesondere sind die Führungsglieder dazu ausgelegt, das Filtergehäuse 1 während des Verbindungsvorgangs zu stützen und zu einer verbundenen Position, in der das Filtergehäuse 1 mit der Filtergehäusehaltestruktur 300 verbunden ist, zu führen.

Die Führungsglieder und/oder der Führungsrahmen 100 kann/können mit einem Gehäuse 302 der Filtergehäusehaltestruktur 300 als bauliche Einheit ausgebildet sein oder an der Filtergehäusehaltestruktur 300 befestigt sein. Im letzteren Fall ist/sind die Führungsglieder bzw. der Führungsrahmen 100 vorzugsweise mittels einer Klebeverbindung mit der Filtergehäusehaltestruktur 300 verbunden oder ist mit dieser verschraubt.

Figur 1 zeigt einen separat ausgebildeten Führungsrahmen 100, der an der Filtergehäusehaltestruktur 300 angeordnet ist.

Der Führungsrahmen 100 weist zumindest zwei Führungsrahmen-Seiten 102 auf, die im Wesentlichen parallel zueinander ausgerichtet sind und von der Filtergehäusehaltestruktur 300 vorragen. Vorzugsweise ragen die Führungsrahmen-Seiten 102 von einer vertikalen Seitenfläche des Gehäuses 302 der Filtergehäusehaltestruktur 300 in einem vorzugsweise rechten Winkel zu der entsprechenden vertikalen Seitenfläche, die einer Verbindungsrichtung V entspricht. Der Abstand zwischen den zumindest zwei Führungsrahmen-Seiten 102 ist derart ausgelegt, dass das Filtergehäuse 1 zumindest teilweise zwischen den Führungsrahmen-Seiten 102 anordenbar ist.

Die zumindest zwei Führungsrahmen-Seiten 102 können direkt mit der Filtergehäusehaltestruktur 300 verbunden sein. Alternativ können die zumindest zwei Führungsrahmen-Seiten 102 mittels einer Führungsrahmen-Halteplatte 104 verbunden sein. Die Führungsrahmen-Halteplatte 104 verbindet vorzugsweise die jeweils ersten freien Enden 106 der zumindest zwei Führungsrahmen-Seiten 102. Als erstes freies Ende 106 wird dabei das Ende der Führungsrahmen-Seiten 102 angesehen, das zu der Filtergehäusehaltestruktur 300 benachbart ist.

Die Führungsrahmen-Halteplatte 104 verbindet die Führungsrahmen-Seiten 102 und dient vorzugsweise gleichzeitig dazu, den Führungsrahmen 100 an der Filtergehäusehaltestruktur 300 zu befestigen.

In der Führungsrahmen-Halteplatte 104 ist zumindest eine Anschlusselement-Aussparung 108 ausgebildet, durch die die Anschlussbuchsen (in Figur 1 nicht gezeigt) zumindest teilweise hindurch ragen. Weist die Führungsrahmen-Halteplatte 104 mehr als eine Anschlusselement-Aussparung 108 auf, ragt vorzugsweise jeweils eine Anschlussbuchse 19 durch diese hindurch.

An oder in Seitenflächen 110 der Führungsrahmen-Seiten 102, die einander gegenüberliegen, ist jeweils ein Führungsglied ausgebildet. Wie in Figur 1 gezeigt, sind diese Führungsglieder vorzugsweise als Führungsschiene 112 ausgeformt. Vorzugsweise erstrecken sich die Führungsschienen 112 über die gesamte Länge der Führungsrahmen-Seiten 102 von einem zweiten freien Ende 114 zu dem jeweiligen ersten freien Ende 106. Das zweite freie Ende 114 einer Führungsrahmen-Seite 102 ist dem ersten freien Ende 106 entgegengesetzt angeordnet.

Die Führungsschiene 112 ist an dem zweiten freien Ende 114 offen, so dass ein später beschriebenes Filtergehäusedeckel-Führungsglied 29 an dem

Filtergehäusedeckel 15 in die Führungsschiene 112 über das offene Ende einsetzbar ist.

Das Ende der Führungsschiene 112 an dem ersten freien Ende 106 der Führungsrahmen-Seite 102 ist durch eine Seitenfläche der Filtergehäusehaltestruktur 300 oder, wie in Figur 1 gezeigt, durch die Führungsrahmen-Halteplatte 104 geschlossen.

Die Führungsschienen 112 sind im Wesentlichen linear ausgebildet, um eine lineare Verschiebung des Filtergehäusedeckels 15 und folglich des Filtergehäuses 1 zu ermöglichen.

Insbesondere sind die Führungsschienen 112 parallel zueinander ausgebildet, so dass ein gleichmäßiges, geradliniges Verschieben des Filtergehäusedeckels 15 in den Führungsschienen 112 erfolgen kann. Jegliches Verkanten wird hierdurch vermieden.

Es ist jedoch denkbar, dass die Führungsschienen 112 an oder benachbart zu dem ersten freien Ende 106 der Führungsrahmen-Seite 102 aufgeweitet sind.

Die Ausrichtung der Führungsschienen 112 entspricht der Verbindungsrichtung V, in der der Filtergehäusedeckel 15 zu der Filtergehäusehaltestruktur 300 hin verschiebbar ist.

Es ist hierbei anzumerken, dass jegliche Beschreibungen der Führungsglieder bzw. der Führungsschienen 12 auch ohne Führungsrahmen 100 gültig sind. Die Ausbildung der Führungsglieder bzw. der Führungsschienen 12 in einem Führungsrahmen 100 ist nur als eine bevorzugte Ausführungsform zu verstehen.

Der Filtergehäusedeckel 15 weist an im Wesentlichen entgegengesetzten Seiten jeweils ein Filtergehäusedeckel-Führungsglied 29 auf, die vorzugsweise von dem Filtergehäusedeckel 15 hervorragen. Die Form des Filtergehäusedeckel-Führungsglieds 29 ist dabei derart ausgestaltet, dass es in eine Führungsschiene 112 eingreifen kann und in dieser verschiebbar gestützt ist. Vorzugsweise ragen die Filtergehäusedeckel-Führungsglieder 29 von dem Filtergehäusedeckel 15 in eine Richtung senkrecht zu der Anschlussrichtung A vor. Die Filtergehäusedeckel-Führungsglieder 29 können dabei als bauliche Einheit mit dem Filtergehäusedeckel 15 ausgebildet sein oder mit diesem reversibel verbunden sein.

Mit anderen Worten ist der Führungsrahmen 100 bzw. die Führungsschienen 112 derart ausgestaltet, dass es möglich ist, ein Filtergehäusedeckel 15 zumindest teilweise zwischen zwei Führungsrahmen-Seiten 102 bzw. Führungsschienen 112 anzuordnen, indem die an entgegengesetzten Seiten angeordneten Filtergehäusedeckel-Führungsglieder 29 jeweils in eine entsprechende Führungsschiene 112 eingreifen. Die Filtergehäusedeckel-Führungsglieder 29 sind über das zweite freie Ende 114 der Führungsrahmen-Seiten 102 in die Führungsschienen 112 einsetzbar und können in der Führungsschiene 112 in einer linearen Richtung zu der verbundenen Position verschoben werden. Folglich wird der Filtergehäusedeckel 15 von zwei Seiten während des Verbindungsprozesses gestützt, so dass ein Kippen oder Verkanten des Filtergehäusedeckels 15 vermieden werden kann. Da die Führungsschiene 112 eine lineare Form aufweist, kann der Filtergehäusedeckel 15 in einer einfachen linearen Form zu der verbundenen Position verschoben werden. Weiterhin kann durch die Führungsschienen 112 das Gewicht des Filtergehäuses 1 getragen werden.

Vorzugsweise entspricht die Anschlussrichtung A der Anschlussstecker 17 sobald die Filtergehäusedeckel-Führungsglieder 29 in die Führungsschienen 112 eingreifen der Verbindungsrichtung V, so dass die Anschlussstecker 17 in einer im Wesentlichen linearen Bewegungsrichtung zu den Anschlussbuchsen 19 geführt werden können.

Um den Filtergehäusedeckel 15 bzw. das Filtergehäuse 1 in der verbundenen Position zu halten und ein versehentliches Trennen zu vermeiden, kann der Filtergehäusedeckel 15 einen Bolzen 31 aufweisen, der mit einem Rastglied in der verbundenen Position verrastet. Wie in Figur 1 gezeigt, ragt der Bolzen 31 vorzugsweise senkrecht zu der Anschlussrichtung A und/oder Verbindungsrichtung V von dem Filtergehäusedeckel 15.

Das Rastglied kann an der Filtergehäusehaltestruktur 300 und/oder dem Führungsrahmen 100 angeordnet sein.

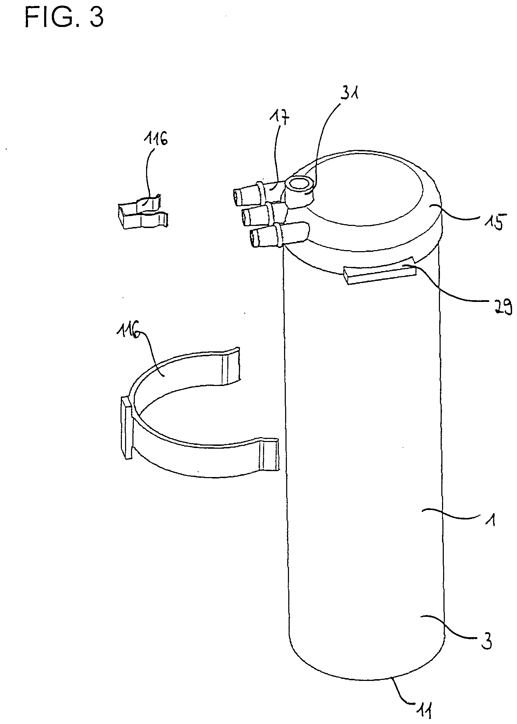

Wie in **Figur 3** gezeigt, kann das Rastglied als rückstellfähige Rastklammer 116 ausgebildet sein. Die Rastklammer 116 ist in der Verbindungsrichtung V und/oder der Anschlussrichtung A zu einer Seite geöffnet, so dass der Bolzen 31 von der Rastklammer 116 (siehe Rastklammer in Figur 3 oben) in der verbundenen Position aufgenommen werden kann. Alternativ kann die Rastklammer 116 (siehe Rastklammer in Figur 3 unten) so ausgebildet sein, dass sie den Basiskörper 3 des Filtergehäuses 1 in der verbundenen Position aufnehmen kann.

Werden die Filtergehäusedeckel-Führungsglieder 29 in den Führungsschienen 112 in der Verbindungsrichtung V zu der Filtergehäusehaltestruktur 300 hin verschoben, treten am Ende des Verbindungsvorgangs der Bolzen 31 und/oder der Basiskörper 3 in die entsprechende Rastklammer 116 ein. Hierzu muss der Benutzer eine entsprechende Kraft aufbringen, die benötigt wird, um die Rastklammer rückstellfähig aufzubiegen, so dass der Bolzen 31 oder der Basiskörper 3 in die Rastklammer 116 eindringen kann. Sobald der Bolzen 31 oder der Basiskörper 3 in der Rastklammer 116 angeordnet ist, bewegt sich die Rastklammer 116 vorzugsweise in ihre Ausgangsposition zurück, so dass der Bolzen 31 oder der Basiskörper 3 in der Rastklammer 116 gehalten wird. Ein ungewolltes Trennen des Filtergehäuses 1 von der Filtergehäusehaltestruktur 300 kann somit vermieden werden. Darüber hinaus spürt der Benutzer in dem Verbindungsvorgang den Widerstand der Rastklammer 116, so dass der Benutzer zuverlässig erfährt, wann die verbundene Position erreicht wurde, nämlich sobald der Widerstand überwunden wurde. Mit anderen Worten wird eine Trägheitsverbindung bereitgestellt.

Die oben beschriebenen Rastklammern 116 können alternativ oder in Kombination verwendet werden.

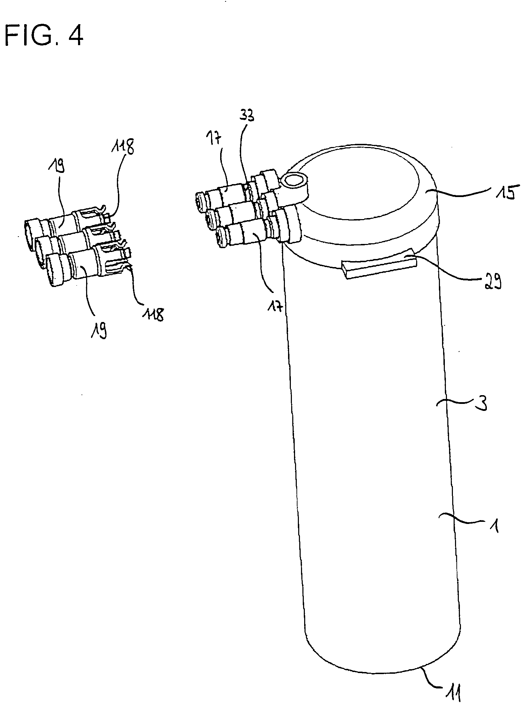

Alternativ oder zusätzlich kann das Rastglied als zumindest ein Rasthaken 118 ausgebildet sein, wie in **Figur 4** gezeigt. Der zumindest eine Rasthaken 118 ragt von einem freien Ende der Anschlussbuchse 19 in der Verbindungsrichtung V und/oder der Anschlussrichtung A vor, um im verbundenen Zustand in eine Vertiefung 33 in dem Anschlussstecker 17 einzugreifen bzw. mit dieser zu verrasten.

An einer Anschlussbuchse 19 kann/können 1, 2, 3, 4, 5, 6 oder mehr Rasthaken 118 vorgesehen sein. Die Vertiefung 33 in dem Anschlussstecker 17, in die die Rasthaken 118 einer Anschlussbuchse 19 einrasten, kann als umlaufende Vertiefung 33 ausgebildet sein oder aus mehreren einzelnen Vertiefungen 33 bestehen, in die jeweils zumindest ein Rasthaken 118 einrasten kann.

Obwohl die Rasthaken 118 in Figur 4 an den Anschlussbuchsen 19 angeordnet sind, können die Rasthaken alternativ an den Anschlusssteckern 17 vorgesehen sein. Die Anschlussbuchsen 19 weisen in diesem Fall die zur Verrastung notwendige Vertiefung 33 auf.

Alternativ oder zusätzlich kann ein Schnappverschluss 200 zum Verrasten des Filtergehäusedeckels 15 in der verbundenen Position dienen.

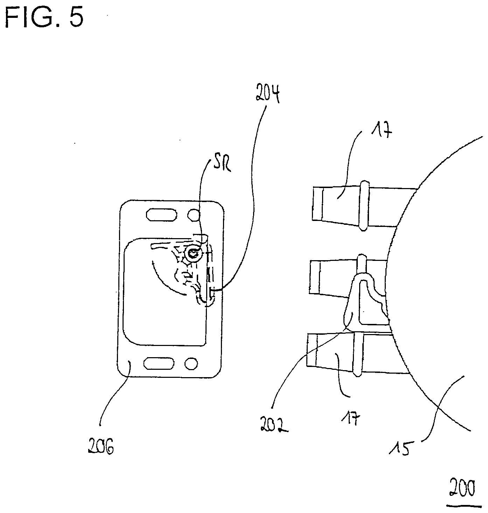

**Figur** 5 zeigt eine bevorzugte Ausführungsform eines Schnappverschlusses 200.

Der in Figur 5 gezeigte Schnappverschluss 200 weist einen Schließhaken 202 und einen vorzugsweise federvorgespannten Schnapper 204 auf, die im verbundenen Zustand miteinander verrastet sind.

Wie in Figur 5 gezeigt, kann der Schließhaken 202 an dem Filtergehäusedeckel 15 angeordnet sein und in der Anschlussrichtung A und/oder Verbindungsrichtung V von dem Filtergehäusedeckel 15 vorragen.

Der Schnapper 204 hingegen kann an der Filtergehäusehaltestruktur 300 oder dem Führungsrahmen 100, vorzugsweise an der Führungsrahmen-Halteplatte 104, mittels einer Schnapper-Halteplatte 206 angeordnet sein. Der Schnapper 204 ist um eine Schnapper-Rotationsachse SR drehbar gelagert, um zwischen einer offenen und einer geschlossenen Position verdrehbar zu sein.

In der offenen Position des Schnappers 204 kann der Filtergehäusedeckel 15 zu der verbundenen Position verschoben werden bzw. der Filtergehäusedeckel 15 aus der verbundenen Position entfernt werden. Sobald der Filtergehäusedeckel 15 in der verbundenen Position angekommen ist, dreht sich der Schnapper 204 um die Schnapper-Rotationsachse SR, um mit dem Schließhaken 202 in Eingriff zu treten und mit diesem zu verrasten.

Nur durch ein aktives Entriegeln des Schnappverschlusses 200 durch den Benutzer kann die Verbindung gelöst werden, so dass eine zuverlässige Verbindung zwischen den Anschlusselementen gewährleistet ist.

Obwohl in Figur 5 der Schließhaken 202 an dem Filtergehäusedeckel 15 angeordnet ist und der Schnapper 204 an dem Führungsrahmen 100 befestigt ist, ist es ebenfalls möglich, dass der Schließhaken an dem Führungsrahmen 100 und der Schnapper 204 an dem Filtergehäusedeckel 15 angeordnet sind.

Weiterhin kann das entsprechende Schnapper-Bauteil auch anstatt an dem Führungsrahmen 100 an der Filtergehäusehaltestruktur 300 selbst angeordnet sein. Als weitere nicht gezeigte Alternativen einer Verrastung sind ein Magnetverschluss, und ein Schnellverbinder denkbar.

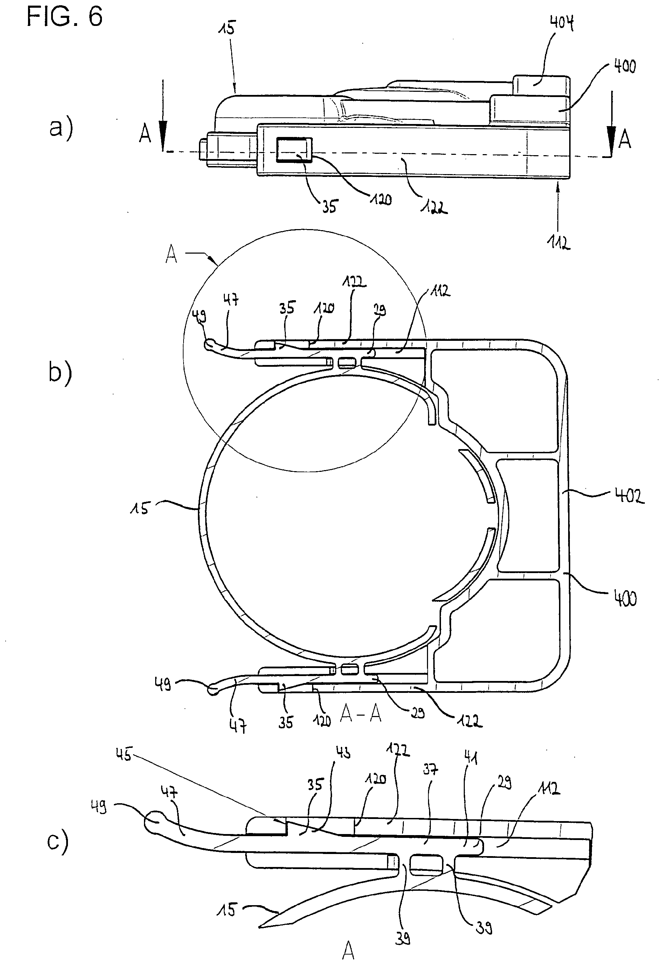

In **Figur 6** ist eine erfindungsgemäße Ausgestaltung eines Rastgliedes gezeigt, welches dazu verwendbar ist, das Filtergehäuse 1 bzw. den Filtergehäusedeckel 15 in der verbundenen Position, in der die Anschlusselemente vollständig miteinander verbunden sind, mittels einer Rastverbindung zu halten.

Erfindungsgemäß weist das Rastglied Filtergehäuse-Rastnasen 35 an dem Filtergehäusedeckel 15 und Führungsglied-Rastaussparungen 120 in den Führungsgliedern auf.

Wie in **Figur 6b****)** gezeigt wird, die einer Schnittansicht entlang der Schnittlinie A-A in **Figur 6a****)** entspricht, weist der Filtergehäusedeckel 15 Filtergehäusedeckel-Führungsglieder 29 auf, die an entgegengesetzten Seiten des Filtergehäusedeckels 15 in einer Richtung vorzugsweise senkrecht zu der Anschlussrichtung A und/oder Verbindungsrichtung V angeordnet sind. Weiterhin ist es bevorzugt, dass sich die Filtergehäusedeckel-Führungsglieder 29 im Wesentlichen auf einer Ebene befinden.

Die Filtergehäusedeckel-Führungsglieder 29 weisen längliche Filtergehäusedeckel-Führungselemente 37 auf, die sich vorzugsweise in Verbindungsrichtung V und/oder Anschlussrichtung A erstrecken. Insbesondere sind die Filtergehäusedeckel-Führungselemente 37 zumindest bereichsweise formkongruent zu den Führungsgliedern ausgebildet, um in die Führungsglieder in dem Verbindungsprozess der Filtergehäuses 1 mit der Filtergehäusehaltestruktur 300 zumindest teilweise eintreten zu können und in diesen geführt zu werden.

Die Filtergehäusedeckel-Führungselemente 37 sind jeweils durch zumindest ein Abstandsglied von dem Filtergehäusedeckel 15 beabstandet. Das Abstandsglied ist derart ausgelegt, die Filtergehäusedeckel-Führungselemente 37 an dem Filtergehäusedeckel 15 zu befestigen als auch um die Filtergehäusedeckel-Führungselemente 37 rückstellfähig zu lagern. Das Abstandsglied kann hierzu aus einem Abstandssteg 39 ausgebildet sein. Wie in Figur 6b) gezeigt ist, können vorzugsweise zwei Abstandsstege 39 angeordnet sein, um ein Filtergehäusedeckel-Führungselement 37 an dem Filtergehäusedeckel 15 anzuordnen. Um eine rückstellfähige Bewegung des Filtergehäusedeckel-Führungselements 37 zuzulassen, sind die Abstandsstege 39 in Anschlussrichtung A und/oder Verbindungsrichtung V voneinander beabstandet. Weiterhin sind die Länge und die Dicke der Abstandsstege 39 danach ausgelegt, wie stark die Filtergehäusedeckel-Führungselemente 37 ausgelenkt werden können und wie leichtgängig diese Bewegung ausführbar ist.

Die Abstandsstege 39 ragen vorzugsweise in eine Richtung senkrecht zu der Anschlussrichtung A und/oder Verbindungsrichtung V von dem Filtergehäusedeckel 15 vor. Die Länge der Abstandsstege 39 definiert den Abstand der Filtergehäusedeckel-Führungselemente 37 von dem Filtergehäusedeckel 15.

Die Abstandsstege 39 sind mit den Filtergehäusedeckel-Führungselementen 37 an oder nahe dem ersten Ende 41 der Filtergehäusedeckel-Führungselemente 39 verbunden. Als erstes Ende 41 der Filtergehäusedeckel-Führungselmente 39 wird hierbei das Ende angesehen, das näher an den Anschlusssteckern 17 des Filtergehäuses 1 angeordnet ist. Als "nahe" zu dem ersten Ende 41 wird ein Abstand von etwa 5mm bis 30mm, vorzugsweise etwa 10mm bis 25mm, und vorzugsweise etwa 15mm bis 20mm angesehen.

An einer Seite der Filtergehäusedeckel-Führungselemente 37, die dem Filtergehäusedeckel 15 abgewandt ist, ist jeweils vorzugsweise eine Filtergehäusedeckel-Rastnase 35 angeordnet. Die Filtergehäusedeckel-Rastnase 35 weist vorzugsweise eine steigende Fläche 43 auf, die in Anschlussrichtung A von einer Seite, die näher an den Anschlussteckern 17 ist, vorzugsweise kontinuierlich ansteigt. Alternativ kann die steigende Fläche 43 diskontinuierlich oder stufenförmig oder trapezförmig ansteigen. Eine zweite Fläche der Filtergehäusedeckel-Rastnase 35 erstreckt sich senkrecht zu dem Filtergehäusedeckel-Führungselement 37 und dient als Rastnasen-Verrastungsfläche 45.

Die Führungsglieder bzw., wie in Figur 6 gezeigt, die Führungsschienen 112 weisen jeweils zumindest eine Führungsglied-Rastaussparung 120 auf. Diese kann als Öffnung ausgebildet sein, die die Führungsschiene 112 durchdringt oder als Vertiefung, wobei die Vertiefung in einer Seitenfläche der Führungsschiene 112 ausgebildet sein muss, die dem Filtergehäusedeckel 15 im eingesetzten Zustand des Filtergehäusedeckels 15 zugewandt ist.

In die Führungsglied-Rastaussparungen 120 sind im verbundenen Zustand, wenn die Anschlusselemente vollständig verbunden sind, die Filtergehäusedeckel-Rastnasen 35 jeweils einrastbar.

Die Breite des Filtergehäusedeckels 15 inklusive der Abstandsstege 39 und der Filtergehäusedeckel-Führungselemente 37 weisen vorzugsweise eine derartige Breite auf, dass die Filtergehäusedeckel-Führungselemente 37 in die Führungsschienen 112 einsetzbar sind und in diesen verschoben werden können. Die Breite des Filtergehäusedeckels 15 inklusive der Abstandsstege 39 und der Filtergehäusedeckel-Führungselemente 37 plus der Filtergehäusedeckel-Rastnasen 35 ist jedoch breiter als die Breite zwischen den Außenflächen 122 der Führungsschienen 112. Als Außenfläche 122 wird hierbei die Fläche der Führungsschienen 112 angesehen, die dem Filtergehäusedeckel 15 im eingesetzten Zustand zugewandt ist.

Die Filtergehäusedeckel-Rastnasen 35 sind vorzugsweise an einer Position angeordnet, die weiter von den Anschlusssteckern 17 beabstandet ist als die Abstandsstege 39.

Wird der Filtergehäusedeckel 15 bzw. die Filtergehäusedeckel-Führungselemente 37 in die Führungsschienen 112 eingesetzt, so kann der Filtergehäusedeckel 15 so lange in Verbindungsrichtung V verschoben werden bis die Führungsschiene 112 mit den Filtergehäusedeckel-Rastnasen 35 in Berührung kommen. Durch diesen Kontakt wird das Filtergehäusedeckel-Führungselement 37 rückstellfähig ausgelenkt, so dass die Filtergehäusedeckel-Führungselemente 37 zumindest in dem Bereich hinter den Abstandsstegen 39 zu dem Filtergehäusedeckel 15 ausgelenkt werden. Als "hinter" den Abstandsstegen 39 wird der Bereich der Filtergehäusedeckel-Führungselemente 37 verstanden, der in Anschlussrichtung A der Seite der Anschlussstecker 17 entgegengesetzt ist.

Wird der Filtergehäusedeckel 15 weiter in Verbindungsrichtung V verschoben, gleitet die Außenfläche 122 der Führungsschiene 112 an der steigenden Fläche 43 der Filtergehäusedeckel-Rastnase 35 entlang. Erreicht die Filtergehäusedeckel-Rastnase 35 die Führungsglied-Rastaussparung 120, bewegen sich die Filtergehäusedeckel-Führungselemente 37 in ihre ursprüngliche Position zurück, so dass die Filtergehäusedeckel-Rastnasen 35 jeweils mit einer entsprechenden Führungsglied-Rastaussparung 120 verrasten. Insbesondere die Rastnasen-Verrastungsfläche 45, die mit der Führungsschiene 112 in Kontakt steht, verhindert ein ungewolltes Herausziehen des Filtergehäusedeckels 15.

Um die Verrastung zu lösen oder um den Verrastungsvorgang zu unterstützen, können die Filtergehäusedeckel-Führungselemente 37 jeweils eine Betätigungsfläche 47 aufweisen. Hierzu sind die Filtergehäusedeckel-Führungselemente 37 in Anschlussrichtung A in eine Richtung entgegengesetzt zu der Vorsprungsrichtung der Anschlussstecker 17 verlängert. Dieser verlängerte Abschnitt kann als Betätigungsfläche 47 für den Benutzer dienen. Vorzugsweise ragt die Betätigungsfläche 47 im verbundenen Zustand über die Führungsschienen 112 hinaus.

Wie in den Figuren 6b) und 6c) gezeigt, ist die Betätigungsfläche 47 aufgebogen, so dass sich der Abstand zwischen den Filtergehäusedeckel-Führungselementen 37 in Anschlussrichtung A zu den Anschlusssteckern 17 hin verjüngt.

Durch ein Zusammenpressen der Filtergehäusedeckel-Führungselemente 37 durch den Benutzer können die Filtergehäusedeckel-Führungselementen 37 rückstellfähig ausgelenkt werden. Hierdurch kann die Verrastung gelöst werden. Presst man die Filtergehäusedeckel-Führungselementen 37 mittels der Betätigungsflächen 47 auseinander, kann die Verrastung unterstützt werden.

Vorzugsweise verjüngen sich die Betätigungsflächen 47 in einer gebogenen Form. Die gebogene Form kann hierbei der natürlichen Form eines menschlichen Fingers angepasst sein. Am freien Ende der Betätigungsflächen 47 kann zusätzlich eine Betätigungsflächen-Verdickung 49 ausgebildet sein. Hierdurch kann gewährleistet werden, dass die Finger des Benutzers sicher auf den Betätigungsflächen 47 aufliegen können und ein Abrutschen verhindert werden kann.

In einer bevorzugten Ausführungsform sind die Führungsschienen 112 mit einer Filtergehäusedeckel-Abdeckung 400 ausgebildet.

Die Filtergehäusedeckel-Abdeckung 400 verbindet zu einem die beiden Führungsschienen 112 und kann zusätzlich dazu verwendet werden, die Führungsschienen 112 an der Filtergehäuse-Haltestruktur 300 zu befestigen.

Die Filtergehäusedeckel-Abdeckung 400 weist hierzu ein Abdeckungs-Verbindungselement 402 auf. Auf einer Oberseite des Abdeckungs-Verbindungselements 402 sind entsprechend der Anzahl der Anschlusselemente Abdeckungshauben 404 ausgebildet. Die Abdeckungshauben 404 sind in Anschlussrichtung A und/oder Verbindungsrichtung V in Richtung zu dem Filtergehäusedeckel 15 offen, so dass die Anschlussstecker 17 in die Abdeckungshauben 404 eindringen können. Die Anschlussbuchsen 19 der Filtergehäuse-Haltestruktur 300 sind von den Abdeckungshauben 404 überdeckt. Im verbundenen Zustand der Anschlusselemente überdecken die Abdeckungshauben 404 die Anschlusselemente.

Obwohl als separate Elemente dargestellt, kann der Führungsrahmen 100 und/oder die Filtergehäusedeckel-Abdeckung 400 einstückig mit der Filtergehäusehaltestruktur 300 ausgebildet sein.

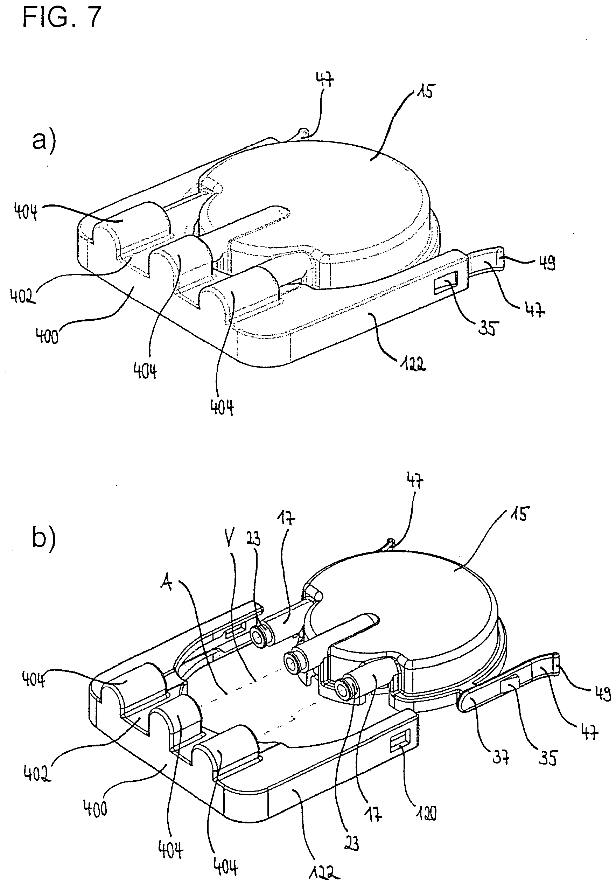

**Figur 7a****)** zeigt den Filtergehäusedeckel 15 aus Figur 6 im verbundenen Zustand der Anschlusselemente, die durch die Filtergehäusedeckel-Abdeckung 400 abgedeckt werden.

**Figur 7b****)** zeigt die Filtergehäusedeckel-Abdeckung 400 und den Filtergehäusedeckel 15 aus Figur 6 im unverbundenen Zustand.

Das Abdeckungs-Verbindungselement 402 kann vorzugsweise formkongruent zu dem Filtergehäusedeckel 15 ausgebildet sein, so dass im verbundenen Zustand, die Fläche des Filtergehäusedeckels 15, die mit dem Abdeckungs-Verbindungselement 402 in Verbindung kommt, formkongruent sind.

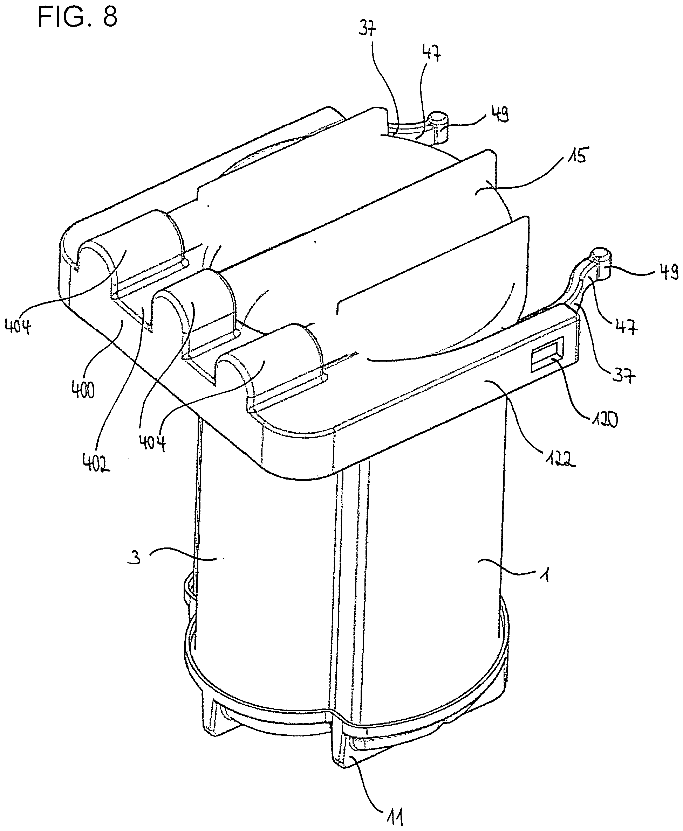

**Figur 8** zeigt eine Ausführungsform, die ähnlich zu der Ausführungsform der Figuren 6 und 7 ist und sich im Wesentlichen darin unterscheidet, dass sich die Filtergehäusedeckel-Führungselemente 37 in Anschlussrichtung A von den Anschlusssteckern 17 weg verjüngen. Hierdurch kann gewährleistet werden, dass die Betätigung der Betätigungsflächen 47 für jegliche Handgrößen bedienbar sind.

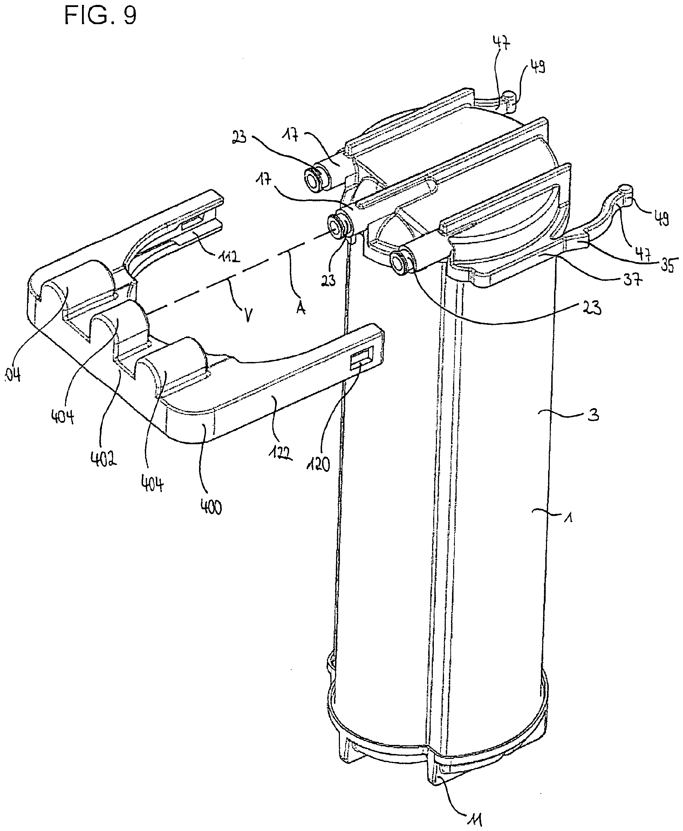

Die Filtergehäusedeckel-Führungselemente 37 können hierbei rückstellfähig an dem Filtergehäusedeckel 15, wie in der Ausführungsform der Figuren 6 und 7 gelagert sein. Alternativ hierzu können, wie in **Figur 9** gezeigt ist, die Filtergehäusedeckel-Führungselemente 37 starr mit dem Filtergehäusedeckel 15 verbunden sein. Lediglich der Bereich der Filtergehäusedeckel-Führungselemente 37, der sich verjüngt ist rückstellfähig ausgestaltet. In dem sich verjüngenden Bereich sind die Filtergehäusedeckel-Rastnasen 35 und die Betätigungsflächen 47 angeordnet. Der starre Bereich der Filtergehäusedeckel-Führungselemente 37 ist der Bereich, der in einem Führungsglied bzw. einer Führungsschiene 112 führbar ist. Dieser Bereich ist vorzugsweise formkongruent zu den Führungsgliedern bzw. den Führungsschienen 112 ausgestaltet.

Obwohl in den Figuren 6 bis 9 beschrieben wird, dass die Betätigungsflächen 47 jeweils identisch ausgebildet sind, kann die Form der Betätigungsflächen 47 in den einzelnen Formen voneinander abweichen.

Es ist anzumerken, dass Kombinationen der oben aufgezeigten Rastglieder ebenfalls möglich sind.

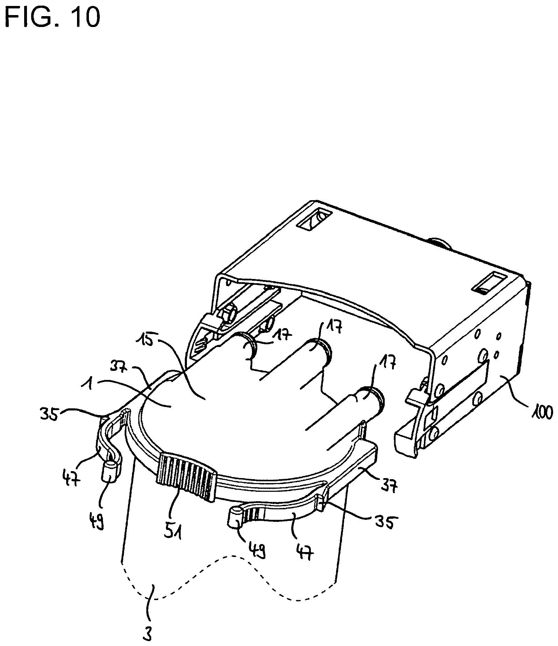

**Figur 10** zeigt eine perspektivische Ansicht eines bevorzugten Führungsrahmens 100 und eines bevorzugten Filtergehäusedeckels 15. Der Filtergehäusedeckel 15 ist, wie in Figur 10 gezeigt, ähnlich zu dem Filtergehäusedeckel 15 aus den Figuren 8 und 9 ausgebildet, unterscheidet sich jedoch darin, dass an einem hinteren Ende des Filtergehäusedeckels 15, welches entgegengesetzt zu dem Ende ausgerichtet ist, an dem die Anschlussstecker 17 angeordnet sind, zumindest ein Druckgeber 51 angeordnet ist. Der Druckgeber 51 ist als Betätigungsfläche für zumindest einen Finger des Benutzers ausgelegt, der auf den Druckgeber 51 auflegbar ist, um den Filtergehäusedeckel 15 in dem Führungsrahmen 100 verschieben zu können und den notwendigen Druck aufzubringen, um die Anschlussstecker 17 vollständig mit den Anschlussbuchsen 19 zu verrasten. Vorzugsweise ist der Druckgeber 51 gebogen ausgebildet, um ein Verrutschen bzw. Abrutschen des Fingers zu vermeiden. Weiterhin kann der Druckgeber 51 mit einer geriffelten bzw. angerauten Oberfläche versehen sein. Dies kann ebenfalls ein Abrutschen des Fingers vermeiden.

Obwohl der Druckgeber 51 in Figur 10 an einem Filtergehäusedeckel 15 gemäß den Figuren 8 und 9 angeordnet ist, kann der Druckgeber 51 jedoch auch an jedem anderen Filtergehäusedeckel 15 der übrigen aufgezeigten Ausführungsformen angeordnet sein.

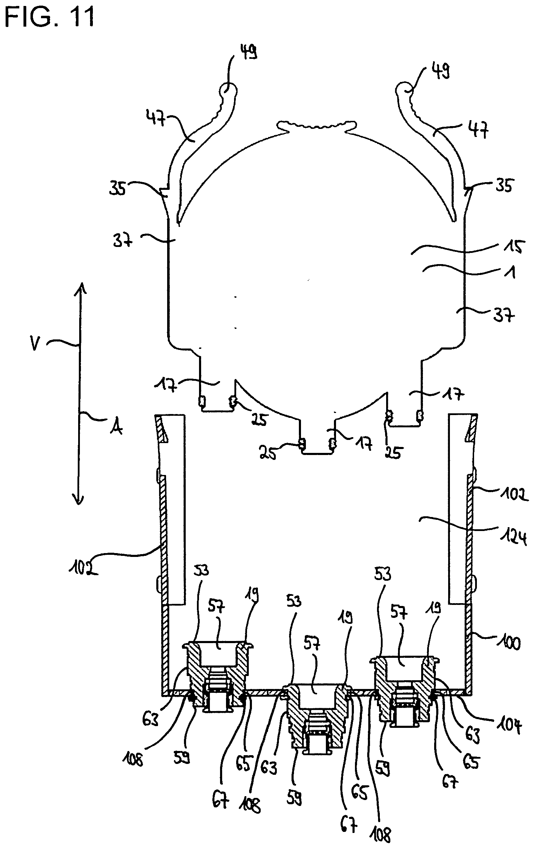

Die bevorzugte Ausführungsform des Führungsrahmens 100 aus Figur 10 wird in Bezug auf Figur 11 näher beschrieben.

**Figur 11** zeigt eine Schnittansicht durch den Filtergehäusedeckel 15 und den bevorzugten Führungsrahmen 100 aus Figur 10, die entlang der Verbindungsrichtung V geschnitten sind.

In jeder der Anschlusselement-Aussparungen 108, die in der Halteplatte 104 des Führungsrahmens 100 ausgebildet sind, kann jeweils eine Anschlussbuchse 19 ausgebildet sein. Ein vorderes Ende 53 der Anschlussbuchse 19 ragt in einen Innenraum 124 des Führungsrahmens 100, der zwischen den sich gegenüberliegenden Führungsrahmen-Seiten 102 ausgebildet ist. In Abhängigkeit der Anordnung der Anschlussstecker 17 an dem Filtergehäusedeckel 15 können die Anschlussstecker 17 unterschiedlich weit in den Innenraum 124 hineinragen.

An dem vorderen Ende 53 der Anschlussbuchse 19 ist ein Anschlussbuchsen-Aufnahmeraum 57 ausgebildet, in die die Anschlussstecker 17 jeweils zumindest teilweise aufnehmbar sind. Die Größe und/oder die Form des Anschlussbuchsen-Aufnahmeraums 57 ist/sind derart an die Form und/oder Größe der Anschlussstecker 17 angepasst, dass zwischen dem Anschlusstecker 17 und der Anschlussbuchse 19 eine fluiddichte Verbindung herstellbar ist. Dies kann durch die oben beschriebenen Dichtungsringe 25 gewährleistest werden, die beispielsweise an den Anschlusssteckern 17 vorgesehen sind. Alternativ kann in dem Anschlussbuchsen-Aufnahmeraum 57 zumindest ein Dichtungsring 25 vorgesehen.

Weiterhin kann ein hinteres Ende 59 der Anschlussbuchse 19, welches dem vorderen Ende 53 der Anschlussbuchse 19 entgegengesetzt ist, aus dem Führungsrahmen 100 herausragen. Ist der Führungsrahmen 100 mit einer Filtergehäusehaltestruktur 300 (hier nicht gezeigt) verbunden, ragt das hintere Ende 53 der Anschlussbuchse 19 vorzugsweise in einen Innenraum des Gehäuses der Filtergehäusehaltestruktur (hier nicht gezeigt), um dort mittels beispielsweise Schläuchen mit Auffangbehälter für das Fluid verbunden zu werden. Um hierzu einen Fluidtransfer durch die Anschlussbuchse 19 hindurch zu ermöglichen, erstreckt sich von dem Anschlussbuchsen-Aufnahmeraum 57 zu dem hinteren Ende 59 der Anschlussbuchse 19 zumindest ein Fluidkanal 61.

In einer Mantelfläche 63 der Anschlussbuchse 19, die sich um die Verbindungsrichtung V bzw. die Anschlussrichtung A herum erstreckt, ist zumindest eine umlaufende Stufe 65 und/oder Kerbe ausgebildet. Eine umlaufende Stufe 65 ist vorzugsweise so ausgebildet, dass sich die Anschlussbuchse 19 von dem vorderen Ende 53 zu dem hinteren Ende 59 an dieser Stelle verjüngt. Der verjüngte Abschnitt der Anschlussbuchse 19 kann dabei durch die Anschlusselement-Aussparung 108 des Führungsrahmens 100 hindurchragen, während der breitere Abschnitt der Anschlussbuchse 19 breiter bzw. größer ist als die Anschlusselement-Aussparung 108, so dass die Anschlussbuchse 19 mit Hilfe der Stufe 65 auf der Führungsrahmen-Halteplatte 104 vorzugsweise formschlüssig aufsitzt. Handelt es sich um eine Kerbe, ragt der umlaufende Rand der Anschlusselement-Aussparung 108 in die Kerbe hinein. Hierdurch wird ebenfalls eine feste Anordnung der Anschlussbuchse 108 an dem Führungsrahmen 100 erzielt.

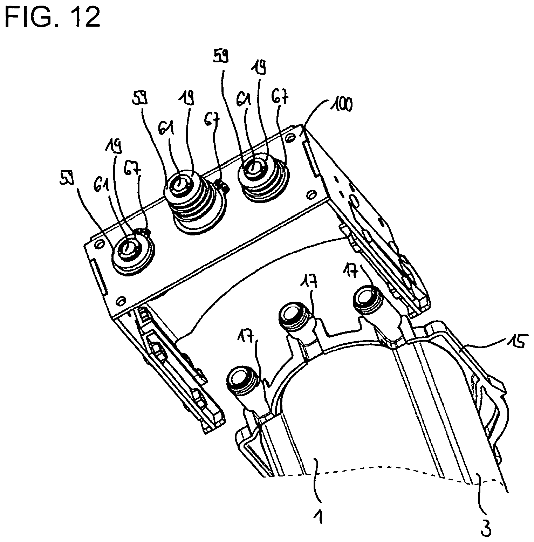

Weist die Anschlussbuchse 19 eine Stufe 65 auf, kann die Anschlussbuchse 19 mit Hilfe zumindest eines Sicherungsrings 67 gegen ein Verrutschen in der Verbindungsrichtung V bzw. der Anschlussrichtung A (X-Richtung) gesichert werden, wie in **Figur 12** gezeigt.

Vorzugsweise ist die Größe der jeweiligen Anschlussbuchse 19 bzw. der Anschlusselement-Aussparung 108 derart dimensioniert, dass die Anschlussbuchse 19 innerhalb der Anschlusselement-Aussparungen 19 0,5 mm bis 1mm Spiel in der Y-Z-Ebene aufweisen, d.h. entsprechend des Spiels in der Y-Achse und/oder Z-Achse beweglich gelagert sind (X-Achse entspricht Verbindungsrichtung V). Vorzugsweise haben die äußeren Anschlussbuchsen 19 ein geringeres Spiel als die mittlere(n) Anschlussbuchsen 19. Beispielsweise weisen die äußeren Anschlussbuchsen 19 ein Spiel von 0,5 mm auf, während die mittlere(n) Anschlussbuchse(n) ein Spiel von 1 mm aufweist/aufweisen. Mit Hilfe des zusätzlichen Spiels kann das Verbinden der Anschlussbuchsen 19 mit den Anschlusssteckern 17 erleichtert werden, so dass für den Benutzer das Verbinden des Filtergehäuses 1 mit der Filtergehäusehaltestruktur 300 verbessert wird.

Obwohl derartige Anschlussbuchsen 19 bezüglich der Figuren 10 bis 12 mit dem Führungsrahmen 100 verbunden sind, können die Anschlussbuchsen 19 auch in entsprechende Aussparungen in dem Gehäuse 302 der Filtergehäusehaltestruktur 300 eingesetzt sein, wenn der Führungsrahmen 100 beispielsweise keine Führungsrahmen-Halteplatte 104 aufweist. Weiterhin können derartige Anschlussbuchsen 19 in jeder der vorangehend beschriebenen Ausführungsformen eingesetzt sein.

In jeder der oben aufgezeigten Verrastungen kann außerdem eine elektrische/elektronische Intelligenz beinhaltet sein, die die Verbindung mit dem Kartuschendeckel 15 erkennt. Hier sind elektrische Schließer/Öffner, Relais oder elektronische Sensoren wie NFC ("near field communication) oder RFID ("radio-frequency identification") möglich. Weiterhin ist es denkbar, mittels eines Barcodes die Lage und Art der eingesetzten Reinigungskartusche zu erkennen

### Bezugszeichenliste

- 1: Filtergehäuse
- 3: Basiskörper
- 9: erstes freies Ende des Basiskörpers
- 11: Filtergehäuseboden
- 13: zweites freies Ende des Basiskörpers
- 15: Filtergehäusedeckel
- 17: Anschlussstecker
- 19: Anschlussbuchse
- 21: äußere Seite des Anschlusssteckers
- 23: Kerbe
- 25: Dichtungselement
- 27: innere Seite der Anschlussbuchse
- 29: Filtergehäusedeckel-Führungsglied
- 31: Bolzen
- 33: Vertiefung
- 35: Filtergehäusedeckel-Rastnase
- 37: Filtergehäusedeckel-Führungselement
- 39: Abstandssteg
- 41: erstes Ende des Filtergehäusedeckel-Führungselement
- 43: steigende Fläche der Filtergehäusedeckel-Rastnase
- 45: Rastnasen-Verrastungsfläche
- 47: Betätigungsfläche
- 49: Betätigungsflächen-Verdickung
- 51: Druckgeber
- 53: vorderes Ende der Anschlussbuchse
- 57: Anschlussbuchsen-Aufnahmeraum
- 59: hinteres Ende der Anschlussbuchse
- 61: Fluidkanal
- 63: Mantelfläche der Anschlussbuchse
- 65: Stufe
- 67: Sicherungsring
- 100: Führungsrahmen
- 102: Führungsrahmen-Seite
- 104: Führungsrahmen-Halteplatte
- 106: erstes freies Ende der Führungsrahmen-Seite
- 108: Anschlusselement-Aussparung
- 110: gegenüberliegende Seitenflächen der Führungsrahmen-Seiten
- 112: Führungsschiene
- 114: zweites freies Ende der Führungsrahmen-Seite
- 116: Rastklammer
- 118: Rasthaken
- 120: Führungsglied-Rastaussparung
- 122: Außenfläche der Führungsschiene
- 124: Innenraum des Führungsrahmens

- 200: Schnappverschluss
- 202: Schließhaken
- 204: Schnapper
- 206: Schnapper-Halteplatte

- 300: Filtergehäusehaltestruktur
- 302: Gehäuse der Filtergehäusehaltestruktur

- 400: Filtergehäusedeckel-Abdeckung
- 402: Abdeckungs-Verbindungselement
- 404: Abdeckungshaube

- A: Anschlussrichtung
- SR: Schnapper-Rotationsachse
- V: Verbindungsrichtung

## Patentansprüche

1. Verbindungsstruktur zum Verbinden eines Filtergehäuses (1) mit einer Filtergehäusehaltestruktur (300), die dazu ausgelegt ist, eine zu reinigende Flüssigkeit dem Filtergehäuse (1) zuzuführen und die gereinigte Flüssigkeit abzuführen, wobei die Verbindungsstruktur umfasst:
- einen Filtergehäusedeckel (15), der mit dem Filtergehäuse (1), welches dazu ausgelegt ist, ein Filtermedium aufzunehmen, verbindbar ist, umfassend:
- mindestens zwei Filtergehäusedeckel-Anschlusselemente (17), die mit entsprechenden Filtergehäusehaltestruktur-Anschlusselementen (19) in der Filtergehäusehaltestruktur (300) verbindbar sind, um einen Flüssigkeitsaustausch zwischen der Filtergehäusehaltestruktur (300) und dem Filtergehäuse (1) bereitzustellen;
- mindestens zwei Filtergehäusedeckel-Führungsglieder (29), die an entgegengesetzten Seiten des Filtergehäusedeckels (15) bereitgestellt sind und dazu ausgebildet sind, mit Führungsgliedern (112), die an der Filtergehäusehaltestruktur (300) angeordnet sind, während eines Verbindungsvorgangs der Filtergehäusedeckel-Anschlusselemente (17) mit den Filtergehäusehaltestruktur-Anschlusselementen (19) in Eingriff gebracht zu werden, um den Filtergehäusedeckel (15) während des Verbindungsvorgangs zu führen, zu stützen und in einer linearen Verbindungsrichtung (V) verschiebbar zu lagern,
wobei die Führungsglieder jeweils zumindest eine Führungsglied-Rastaussparung (120) umfassen, in die jeweils eine Filtergehäusedeckel-Rastnase (35), die an dem Filtergehäusedeckel (15) angeordnet ist, in einer verbundenen Position, in der die Filtergehäusedeckel-Anschlusselemente (17) mit den Filtergehäusehaltestruktur-Anschlusselementen (19) vollständig verbunden sind, verrastbar sind,
wobei die Filtergehäusedeckel-Rastnasen (35) in einer Richtung senkrecht zu einer Anschlussrichtung (A) der Filtergehäusedeckel-Anschlusselemente (17) von den Filtergehäuse-Führungsgliedern (29) vorspringen, und
wobei die Filtergehäusedeckel-Führungsglieder (29) rückstellfähig gelagert sind und Betätigungsflächen (47) umfassen, die sich in der Anschlussrichtung (A) der Filtergehäusedeckel-Anschlusselemente (17) erstrecken und von dem Filtergehäusedeckel (15) in einer Richtung entgegengesetzt zu den Filtergehäusedeckel-Anschlusselementen (17) vorragen.

2. Verbindungsstruktur nach Anspruch 1, wobei die mindestens zwei Filtergehäusedeckel-Führungsglieder (29) von den zwei entgegengesetzten Seiten des Filtergehäusedeckels (15) in eine Richtung im Wesentlichen senkrecht zu der Anschlussrichtung (A) der Filtergehäusedeckel-Anschlusselemente (17) hervorragen.

3. Verbindungsstruktur nach einem der vorangehenden Ansprüche, wobei die Anschlussrichtung (A) im Wesentlichen der Verbindungsrichtung (V) entspricht.

4. Verbindungsstruktur nach einem der vorangehenden Ansprüche, wobei die Betätigungsflächen (47) derart ausgebildet sind, dass sie sich in Anschlussrichtung (A) und/oder Verbindungsrichtung (V) aufweiten oder verjüngen.

5. Verbindungsstruktur nach einem der vorangehenden Ansprüche, wobei zumindest ein Druckgeber an einem hinteren Ende des Filtergehäusedeckels (15) angeordnet ist, der dazu ausgelegt ist, durch einen Benutzer zum Verbinden des Filtergehäusedeckels (15) mit der Filtergehäusehaltestruktur (300) gedrückt zu werden.

6. Reinigungssystem umfassend eine Verbindungsstruktur nach einem der Ansprüche 1 bis 5 und eine Filtergehäusehaltestruktur (300), mit der der Filtergehäusedeckel (15) verbindbar ist, wobei die Filtergehäusestruktur (300) ferner aufweist:
- Filtergehäusehaltestruktur-Anschlusselemente (19), die mit den entsprechenden Filtergehäusedeckel-Anschlusselemente (17) verbindbar sind, um einen Flüssigkeitsaustausch zwischen der Filtergehäusehaltestruktur (300) und dem Filtergehäuse (1) bereitzustellen;
- Führungsglieder, die an der Filtergehäusehaltestruktur (300) angeordnet sind und dazu ausgebildet sind, mit den Filtergehäusedeckel-Führungsgliedern (29) während eines Verbindungsvorgangs der Filtergehäusedeckel-Anschlusselemente (17) mit den Filtergehäusehaltestruktur-Anschlusselementen (19) in Eingriff gebracht zu werden, um den Filtergehäusedeckel (15) während des Verbindungsvorgangs zu führen, zu stützen und in einer linearen Verbindungsrichtung (V) verschiebbar zu lagern, und
wobei die Führungsglieder jeweils zumindest eine Führungsglied-Rastaussparung (120) umfassen, in die jeweils eine Filtergehäusedeckel-Rastnase (35) verrastbar sind.

7. Reinigungssystem nach Anspruch 6, wobei die Filtergehäusehaltestruktur-Anschlusselemente (19) in Verbindungsrichtung (V) ausgerichtet sind; und/oder
wobei der Filtergehäusedeckel (15) mit dem Filtergehäuse (1) verbunden ist.

8. Reinigungssystem nach einem der Ansprüche 6 oder 7, wobei die Führungsglieder durch eine Halteplatte (104) verbunden sind und diese an einem Gehäuse (302) der Filtergehäusehaltestruktur (300) angeordnet ist, und
wobei die Filtergehäusehaltestruktur-Anschlusselemente (19) jeweils in eine Aussparung (108) in der Halteplatte (104) eingesetzt sind und durch diese hindurchragen, um mit den Filtergehäusedeckel-Anschlusselementen (17) verbunden zu werden.

9. Reinigungssystem nach Anspruch 8, wobei das Filtergehäusehaltestruktur-Anschlusselement (19) derart in der Aussparung (108) gelagert ist, dass ein Verschieben in der Verbindungsrichtung (V) blockiert ist.

10. Verfahren zum Verbinden eines Filtergehäusedeckels (15) mit einer Filtergehäusehaltestruktur (300), wobei das Verfahren umfasst:
- Bereitstellen eines Reinigungssystems nach einem der Ansprüche 6-9;
- Einsetzen der Filtergehäusedeckel-Führungsglieder (29) in die Führungsglieder derart, dass die Filtergehäusedeckel-Führungsglieder (29) in den Führungsgliedern gestützt werden;
- lineares Verschieben des Filtergehäusedeckels (15) in der Verbindungsrichtung (V) bis die Filtergehäusedeckel-Anschlusselemente (17) des Filtergehäusedeckels (15) mit den Filtergehäusehaltestruktur-Anschlusselementen (19) der Filtergehäusehaltestruktur (300) verbunden sind.

## Claims

1. A connecting structure for connecting a filter housing (1) to a filter housing holding structure (300), which is designed to supply a fluid to be cleaned to the filter housing (1) and to conduct away the cleaned fluid, wherein the connecting structure comprises:
- a filter housing cover (15), which can be connected to the filter housing (1), which is designed to receive a filter medium, comprising
- at least two filter housing cover connection elements (17), which can be connected to corresponding filter housing holding structure connection elements (19) in the filter housing holding structure (300), in order to provide an exchange of fluids between the filter housing holding structure (300) and the filter housing (1) ;
- at least two filter housing cover guide members (29), which are provided on opposite sides of the filter housing cover (15) and are designed to be brought into engagement with guide members (112) that are arranged on the filter housing holding structure (300) during the process of connecting the filter housing cover connection elements (17) to the filter housing holding structure connection elements (19), in order to guide, to support and mount displaceably in a linear connecting direction (V) the filter housing cover (15) during the connecting process,
wherein the guide members respectively comprise at least one guide member latching recess (120), into which in each case, one filter housing cover latching lug (35), which is arranged on the filter housing cover (15), in a connected position, in which the filter housing cover connection elements (17) are completely connected to the filter housing holding structure connection elements (19), can be latched,
wherein the filter housing cover latching lugs (35) protrude perpendicularly to a connection direction (A) of the filter housing cover connection elements (17) from the filter housing guide members (29), and
wherein the filter housing cover guide members (29) are mounted resiliently and comprise actuation surfaces (47), which extend in the connection direction (A) of the filter housing cover connection elements (17) and protrude from the filter housing cover (15) in a direction opposite to the filter housing cover connection elements (17).

2. The connecting structure according to claim 1, wherein the at least two filter housing cover guide members (29) project from the two opposite sides of the filter housing cover (15) in a direction substantially perpendicular to the connection direction (A) of the filter housing cover connection elements (17) .

3. The connecting structure according to any of the foregoing claims, wherein the connection direction (A) corresponds substantially to the connecting direction (V).

4. The connecting structure according to any of the foregoing claims, wherein the actuation surfaces (47) are configured such that they expand or taper in the connection direction (A) and/or connecting direction (V).

5. The connecting structure according to any of the foregoing claims, wherein at least one pressure sensor is arranged on a rear end of the filter housing cover (15), which is designed to be pressed by a user to connect the filter housing cover (15) to the filter housing holding structure (300).

6. A cleaning system comprising a connecting structure according to any of claims 1 to 5 and a filter housing holding structure (300), to which the filter housing cover (15) can be connected, wherein the filter housing structure (300) further has
- filter housing holding structure connection elements (19), which can be connected to the corresponding filter housing cover connection elements (17), in order to provide an exchange of fluids between the filter housing holding structure (300) and the filter housing (1);
- guide members, which are arranged on the filter housing holding structure (300) and are designed to be brought into engagement with the filter housing cover guide members (29) during a process of connecting the filter housing cover connection elements (17) to the filter housing holding structure connection elements (19), in order to guide, to support and to mount displaceably in a linear connecting direction (V) the filter housing cover (15) during the connecting process, and
wherein the guide members respectively comprise at least one guide member latching recess (120), into which in each case, one filter housing cover latching lug (35) can be latched.

7. The cleaning system according to claim 6, wherein the filter housing holding structure connection elements (19) are oriented in connecting direction (V); and/or
wherein the filter housing cover (15) is connected to the filter housing (1).

8. The cleaning system according to any of claims 6 or 7, wherein the guide members are connected by a retaining plate (104) and said retaining plate is arranged on a housing (302) of the filter housing holding structure (300), and
wherein the filter housing holding structure connection elements (19) are respectively inserted in a recess (108) in the retaining plate (104) and protrude through this, in order to be connected to the filter housing cover connection elements (17).

9. The cleaning system according to claim 8, wherein the filter housing holding structure connection element (19) is mounted in the recess (108) such that a displacement in the connecting direction (V) is blocked.

10. A method for connecting a filter housing cover (15) to a filter housing holding structure (300), wherein the method comprises:
- providing a cleaning system according to any of claims 6 to 9;
- inserting the filter housing cover guide members (29) into the guide members such that the filter housing cover guide members (29) are supported in the guide members;
- linearly displacing the filter housing cover (15) in the connecting direction (V) until the filter housing cover connection elements (17) of the filter housing cover (15) are connected to the filter housing holding structure connection elements (19) of the filter housing holding structure (300).

## Revendications

1. Structure d'assemblage pour assembler un boîtier de filtre (1) à une structure de retenue de boîtier de filtre (300), qui est conçue pour amener un liquide à nettoyer au boîtier de filtre (300) et pour évacuer le liquide nettoyé, dans laquelle la structure d'assemblage comprend :
- un couvercle de boîtier de filtre (15), qui peut être assemblé au boîtier de filtre (1), lequel est conçu pour recevoir un milieu filtrant, comprenant :
- au moins deux éléments de raccordement de couvercle de boîtier de filtre (17), qui peuvent être assemblés à des éléments de raccordement de structure de retenue de boîtier de filtre (19) correspondants dans la structure de retenue de boîtier de filtre (300), afin de fournir un échange de liquide entre la structure de retenue de boîtier de filtre (300) et le boîtier de filtre (1) ;
- au moins deux organes de guidage de couvercle de boîtier de filtre (29), qui sont fournis sur les faces opposées du couvercle de boîtier de filtre (15) et sont conçus pour être en prise avec des organes de guidage (112), qui sont disposés sur la structure de retenue de boîtier de filtre (300), pendant un processus d'assemblage des éléments de raccordement de couvercle de boîtier de filtre (17) aux éléments de raccordement de structure de retenue de boîtier de filtre (19), afin de guider, de servir d'appui et de monter mobile dans une direction d'assemblage (V) linéaire le couvercle de boîtier de filtre (15) pendant le processus d'assemblage,
dans laquelle les organes de guidage comprennent respectivement au moins un évidement d'encliquetage d'organe de guidage (120), dans lequel peuvent être encliquetés respectivement un bec d'encliquetage de couvercle de boîtier de filtre (35), qui est disposé sur le couvercle de boîtier de filtre (15), dans une position assemblée, dans laquelle les éléments de raccordement de couvercle de boîtier de filtre (17) sont entièrement assemblés aux éléments de raccordement de structure de retenue de boîtier de filtre (19),
dans laquelle les becs d'encliquetage de couvercle de boîtier de filtre (35) font saillie des organes de guidage de boîtier de filtre (29) dans une direction perpendiculaire à une direction de raccordement (A) des éléments de raccordement de couvercle de boîtier de filtre (17), et
dans laquelle les organes de guidage de couvercle de boîtier de filtre (29) sont montés de manière élastique et comprennent des surfaces d'actionnement (47), qui s'étendent dans la direction de raccordement (A) des éléments de raccordement de couvercle de boîtier de filtre (17) et font saillie du couvercle de boîtier de filtre (15) dans une direction à l'opposé des éléments de raccordement de couvercle de boîtier de filtre (17).

2. Structure d'assemblage selon la revendication 1, dans laquelle les au moins deux organes de guidage de couvercle de boîtier de filtre (29) font saillie des deux faces opposées du couvercle de boîtier de filtre (15) dans une direction sensiblement perpendiculaire à la direction de raccordement (A) des éléments de raccordement de couvercle de boîtier de filtre (17) .

3. Structure d'assemblage selon l'une quelconque des revendications précédentes, dans laquelle la direction de raccordement (A) correspond sensiblement à la direction d'assemblage (V).

4. Structure d'assemblage selon l'une quelconque des revendications précédentes, dans laquelle les surfaces d'actionnement (47) sont réalisées de telle sorte qu'elles s'élargissent ou s'amincissent dans la direction de raccordement (A) et/ou direction d'assemblage (V).

5. Structure d'assemblage selon l'une quelconque des revendications précédentes, dans laquelle au moins un transmetteur de pression est disposé sur une extrémité arrière du couvercle de boîtier de filtre (15), qui est conçu pour être pressé par un utilisateur pour assembler le couvercle de boîtier de filtre (15) à la structure de retenue de boîtier de filtre (300) .

6. Système de nettoyage comprenant une structure d'assemblage selon l'une quelconque des revendications 1 à 5 et une structure de retenue de boîtier de filtre (300), à laquelle le couvercle de boîtier de filtre (15) peut être assemblé, dans lequel la structure de boîtier de filtre (300) présente en outre :
- des éléments de raccordement de structure de retenue de boîtier de filtre (19), qui peuvent être assemblés aux éléments de raccordement de couvercle de boîtier de filtre (17) correspondants, afin de fournir un échange de liquide entre la structure de retenue de boîtier de filtre (300) et le boîtier de filtre (1) ;
- des organes de guidage, qui sont disposés sur la structure de retenue de boîtier de filtre (300) et sont réalisés pour être en prise avec les organes de guidage de couvercle de boîtier de filtre (29) pendant un processus d'assemblage des éléments de raccordement de couvercle de boîtier de filtre (17) aux éléments de raccordement de structure de retenue de boîtier de filtre (19), afin de guider, de servir d'appui et de monter mobile dans une direction d'assemblage (V) linéaire le couvercle de boîtier de filtre (15) pendant le processus d'assemblage, et dans lequel les organes de guidage comprennent respectivement au moins un évidement d'encliquetage d'organe de guidage (120), dans lequel peuvent être encliquetés respectivement un bec d'encliquetage de couvercle de boîtier de filtre (35).

7. Système de nettoyage selon la revendication 6, dans lequel les éléments de raccordement de structure de retenue de boîtier de filtre (19) sont orientés dans la direction d'assemblage (V) ; et/ou
dans lequel le couvercle de boîtier de filtre (15) est assemblé au boîtier de filtre (1).

8. Système de nettoyage selon l'une quelconque des revendications 6 ou 7, dans lequel les organes de guidage sont assemblés par une plaque de retenue (104) et ceux-ci sont disposés sur un boîtier (302) de la structure de retenue de boîtier de filtre (300), et
dans lequel les éléments de raccordement de structure de retenue de boîtier de filtre (19) sont insérés respectivement dans un évidement (108) dans la plaque de retenue (104) et font saillie à travers celui-ci, afin d'être assemblés aux éléments de raccordement de couvercle de boîtier de filtre (17).

9. Système de nettoyage selon la revendication 8, dans lequel l'élément de raccordement de structure de retenue de boîtier de filtre (19) est monté dans l'évidement (108) de telle sorte qu'un déplacement dans la direction d'assemblage (V) est bloqué.

10. Procédé pour assembler un couvercle de boîtier de filtre (15) à une structure de retenue de boîtier de filtre (300), dans lequel le procédé comprend :
- la fourniture d'un système de nettoyage selon l'une quelconque des revendications 6 à 9 ;
- l'insertion des organes de guidage de couvercle de boîtier de filtre (29) dans les organes de guidage de telle sorte que les organes de guidage de couvercle de boîtier de filtre (29) sont en appui dans les organes de guidage ;
- le déplacement linéaire du couvercle de boîtier de filtre (15) dans la direction d'assemblage (V) jusqu'à ce que les éléments de raccordement de couvercle de boîtier de filtre (17) du couvercle de boîtier de filtre (15) soient assemblés aux éléments de raccordement de structure de retenue de boîtier de filtre (19) de la structure de retenue de boîtier de filtre (300) .
